# FASCICULE DE BREVET EUROPEEN

(11) **EP 3 206 780 B1**
(45) Date de publication et mention de la délivrance du brevet: **07.10.2020**
(21) Numéro de dépôt: 15790850.0
(22) Date de dépôt: 14.10.2015
(51) Int. Cl.: B01J 2/04, C09D 9/00, B05D 5/00

(54) **GEL POUR ELIMINER LES GRAFFITIS ET PROCEDE POUR ELIMINER LES GRAFFITIS UTILISANT CE GEL**
GEL ZUR ENTFERNUNG VON GRAFFITIS UND VERFAHREN ZUR ENTFERNUNG VON GRAFFITIS BEI VERWENDUNG DIESES GELS
GEL TO ELIMINATE GRAFFITIS AND PROCESS TO ELIMINATE GRAFFITIS USING THIS GEL

(30) Priorité: 15.10.2014 FR 1459884
(43) Date de publication de la demande: 23.08.2017
(73) Titulaire: Commissariat à l'Énergie Atomique et aux Énergies Alternatives, 75015 Paris (FR)
(72) Inventeur: LUDWIG, Amélie, F-13300 Salon de Provence (FR); GOETTMANN, Frédéric, F-84350 Courthézon (FR); FRANCES, Fabien, F-30340 Rousson (FR)
(74) Mandataire: Brevalex
(86) Numéro de dépôt international: PCT/EP2015/073807
(87) Numéro de publication internationale: WO 2016/059125

(56) Documents cités:
- EP-A1- 2 045 320
- WO-A1-99/09134
- WO-A1-03/008529
- US-A- 6 057 276

## Description

### DOMAINE TECHNIQUE

La présente invention a pour objet l'utilisation d'un gel pour éliminer un graffiti, aussi appelé « tag » se trouvant sur une surface d'un substrat solide.

Le gel selon l'invention peut être qualifié de gel aspirable.

La présente invention a trait, en outre, à un procédé pour éliminer un graffiti sur une surface d'un substrat solide utilisant ce gel.

Le domaine technique de l'invention peut être défini comme celui du traitement de surfaces polluées, salies, détériorées par des graffitis, « tags » en vue d'éliminer les graffitis de ces surfaces et d'améliorer notamment l'aspect visuel de ces surfaces.

L'invention peut s'appliquer à toutes sortes de surfaces telles que les surfaces en polymères organiques, par exemple en matières plastiques ; les surfaces en matériaux vitreux ; les surfaces en matériaux cimentaires comme les ciments, les pâtes, les mortiers et les bétons ; les surfaces en terre crue ou cuite ; les surfaces en briques ou tuiles ; les surfaces en plâtre ; les surfaces en céramiques ; les surfaces en pierre naturelle ou artificielle; les surfaces en enduit ; les surfaces en fibres de verre ; les surfaces en fibrociment ; les surfaces en asphalte ou en goudron ; les surfaces en métal ou en alliage métallique par exemple en acier, en acier galvanisé ou en zinc ; et les surfaces en matériaux à base de cellulose comme le bois. Ces surfaces peuvent être peintes ou non.

Ces surfaces peuvent être poreuses ou non.

L'invention s'applique en particulier à l'élimination des graffitis sur les surfaces extérieures, situées en plein air, des bâtiments, constructions, et objets ou ouvrages d'art.

Mais l'invention peut aussi s'appliquer à l'élimination des graffitis de surfaces intérieures ou extérieures de véhicules aquatiques tels que des bateaux ; de véhicules terrestres tels que des voitures, des camions, des motocyclettes, des trains, des métros, des autocars et autobus ; d'aéronefs tels que des avions, des hélicoptères, ou des hydravions; de pièces de mobilier intérieur ou extérieur tels que des pièces de mobilier urbain ou des sièges de véhicules de transport en commun, etc.

Il est à noter qu'il n'existe aucune limitation quant à la surface sur laquelle peuvent se trouver les graffitis éliminés selon l'invention.

### ÉTAT DE LA TECHNIQUE ANTÉRIEURE

Depuis plusieurs années, la lutte contre la prolifération des graffitis, encore appelés « tags » est une préoccupation croissante pour de nombreuses collectivités et sociétés privées, et ce dans de nombreux pays.

En effet, outre la détérioration des biens comme les bâtiments, le mobilier urbain, les trains... qu'elle induit, la présence de graffitis peut également nuire à l'image d'une ville, d'un quartier ou d'une entreprise par le sentiment d'insécurité qu'elle génère. Ce type de vandalisme a donc un fort impact social et économique.

Ces graffitis constituent notamment un problème grave lorsqu'ils recouvrent des bâtiments, et plus particulièrement des monuments, qui sont très souvent en pierre, briques et autres matériaux poreux. En effet, il est très difficile d'éliminer les graffitis de tels matériaux poreux et un héritage culturel inestimable peut être ainsi irréversiblement altéré.

Il est donc nécessaire de pouvoir traiter, aussi bien à titre préventif que curatif, les matériaux vandalisés par des tags, sans altérer ces matériaux, et de manière réactive, afin de prévenir de nouvelles attaques et d'éviter que la peinture n'interagisse et ne se combine avec la pollution de l'air, ce qui rend les opérations de nettoyage plus difficiles.

Pour cela différentes techniques de traitement existent. On peut distinguer d'une part les techniques préventives et d'autre part les techniques curatives.

Les techniques préventives comprennent essentiellement l'application de pelliculages sacrificiels, semi-permanents ou permanents qui permettent de protéger les surfaces et/ou de faciliter l'élimination de la peinture.

Parmi les techniques curatives, on peut citer la projection d'eau sous haute-pression, le sablage, l'application de peinture sur les surfaces « taguées », recouvertes de graffitis, l'élimination des graffitis par des agents décapants tels que des solvants ou des alcalis ou par irradiation avec un rayon laser.

Toutes ces techniques de traitement nécessitent une main d'œuvre formée, qualifiée, et importante, notamment pour la pose des films de protection, la manipulation et la maintenance des appareils haute pression ou des lasers, la manipulation des produits chimiques, ce qui rend les opérations de lutte anti-graffitis très coûteuses.

Certaines de ces techniques de traitement mettent en œuvre des gels.

Ainsi, le document DE-A1-195 27 582 [1] concerne un procédé pour éliminer les graffitis réalisés en peinture de bombe aérosol dans lequel on dissout la peinture avec un gel comprenant de l'huile essentielle d'anis, de l'huile essentielle d'inule odorante, de la glycérine, et de la silice.

Le gel de ce document n'est pas un gel que l'on peut qualifier de gel aspirable. De plus, le gel de ce document a une action dissolvante sur le graffiti, qui doit par la suite être éliminé par une opération supplémentaire de type lavage.

Le document FR-A1-2 683 541 [2] concerne un nettoyant pour des surfaces peintes souillées par des graffitis, qui peut être sous forme de gel, et qui comprend un ou plusieurs solvants choisis parmi le butanol, l'isopropanol, l'éthanol, la butyrolactone, la cyclohexanone, la N-méthyl-pyrrolidone, le diméthylformamide, l'acétate de butyle, l'acétate d'éthylglycol, l'acétate d'éthoxypropyle et le butylglycol, un ou plusieurs oxydants puissants, et 1 à 10% en poids d'au moins une substance capable de former un gel telle que les bentonites, silices et dérivés de la cellulose.

Le gel de ce document n'est pas un gel que l'on peut qualifier de gel aspirable, il comprend des oxydants puissants susceptibles d'endommager les surfaces, et son efficacité est, semble-t-il, faible.

En outre, dans ce document, il n'y a aucune description du procédé qui est utilisé pour appliquer ou mettre en œuvre le gel.

Le document FR-A-2 737 218 [3] décrit une composition nettoyante sous forme de gel pour éliminer les gommes à mâcher et les graffitis qui comprend un solvant carboné, un gélifiant, un solvant polaire et éventuellement un agent miscibilisant.

Le gélifiant peut être notamment du dioxyde de silicium finement divisé, le solvant de l'éthanol, et le solvant carboné est choisi parmi les essences C, E, F, et A.

Le gel de ce document présente l'inconvénient majeur de contenir un solvant carboné qui est choisi parmi des composés cancérigènes.

En outre, le gel de ce document n'est pas, semble-t-il, un gel que l'on peut qualifier de gel aspirable et son efficacité est, semble-t-il, faible.

En outre, le mode d'application de la composition de ce document sur les gommes et les graffitis n'est pas précisé. En particulier on ne cherche pas dans ce document à obtenir spécifiquement un gel pulvérisable.

Le document BE-A3-1014037 [4] concerne un procédé d'élimination de graffitis, dans lequel on pulvérise sur la surface souillée un gel comprenant un mélange de solvants carbonés, d'un solvant polaire et d'un gélifiant, et on laisse sécher le gel.

On projette ensuite un composé agissant à l'état gazeux, tels que des glaçons de gaz carbonique, ou de la vapeur d'eau sèche sous pression, sur la surface où se trouve le gel sec, et généralement on rince la surface.

Le gélifiant peut être notamment du dioxyde de silicium finement divisé, et le mélange de solvants carbonés est choisi parmi les essences C, E, F, et A.

Le gel de ce document présente l'inconvénient de contenir un solvant carboné choisi parmi des composés toxiques, cancérigènes, qui présentent donc un danger pour les opérateurs.

Le gel de ce document n'est pas, semble-t-il, un gel que l'on peut qualifier de gel aspirable, et le procédé de ce document comporte de ce fait une étape finale de rinçage qui produit des quantités importantes d'effluents liquides.

Le document US-A1-2007/0181166 [5] concerne un procédé pour éliminer des graffitis, qui met en œuvre un gel visqueux constitué d'un mélange de divers solvants et agents tensio-actifs, par exemple un mélange de N-méthyl-2-pyrrolidone, d'éther mono méthylique du dipropylène glycol, de 2-méthoxy-2-propanol, d'acétate de 2-méthoxy-1-méthyléthyle, d'éther de polyglycols et d'alcools gras, et de solvant naphta lourd. La surface sur laquelle se trouvent les graffitis est tout d'abord humidifiée, puis le gel est appliqué sur les graffitis à l'aide d'un pinceau ou d'une taloche et frotté pour le faire pénétrer dans le graffiti. Le gel est ensuite éliminé à l'aide d'une éponge ou d'un chiffon humide.

Ce gel comprend certains composés tels que le naphta lourd qui sont cancérigènes.

Ce gel est un gel essentiellement organique qui ne comprend que des agents viscosants organiques et non minéraux.

Ce gel n'est pas un gel que l'on peut qualifier de gel minéral aspirable et son élimination à l'issue du traitement qui se fait par voie humide est fastidieuse.

Le document WO-A1-99/09134 [6] concerne une composition de nettoyage pour éliminer les composés à longue chaîne tels que le bitume, le goudron, la cire et la gomme à mâcher qui comprend une matrice de gel inerte à l'intérieur de laquelle est enfermé un solvant liquide non-aqueux dans lequel le composé à longue chaîne est soluble.

La matrice du gel est formée par exemple par une silice ou une argile.

Le solvant peut être choisi parmi les hydrocarbures saturés et insaturés, les alcools, les glycols, les aldéhydes, les cétones, les éthers, les terpènes, les phtalates, les esters, ou les hydrocarbures halogénés.

La revendication 7 cite au moins 38 solvants parmi lesquels est cité incidemment l'acétate d'éthyle.

Le gel de ce document n'est pas un gel que l'on peut qualifier de gel aspirable.

En outre, dans ce document, il n'y a aucune description du procédé qui est utilisé pour appliquer ou mettre en œuvre le gel.

Le seul exemple donné dans ce document concerne l'élimination de gomme à mâcher dont la composition est très éloignée de celle des graffitis qui sont constitués généralement de peinture. Il n'y a aucune mention ni aucune suggestion dans ce document que le gel qui y est décrit puisse être utilisé pour résoudre le problème spécifique de l'élimination des graffitis.

Le document GB -A-1 487 737 [7] concerne une composition sous la forme d'un gel pour éliminer les graffitis en peinture de type aérosol qui comprend un solvant organique comprenant un composé comprenant un groupe ester et un composé comprenant un groupe éther et un groupe alcool, un agent gélifiant soluble à la fois dans l'eau et un solvant organique et un tensio-actif qui conduit à la formation d'une émulsion huile dans l'eau lorsque la composition est dispersée dans l'eau.

Parmi les très nombreux composés qui peuvent constituer le solvant organique, l'acétate d'éthyle est incidemment cité à la page 2, lignes 17 et 18.

L'agent gélifiant, viscosant de la composition est un dérivé de la cellulose soluble dans l'eau tel que l'hydroxypropyl cellulose.

Des adsorbants solides finement divisés tels que la silice ou de l'alumine pyrogénée peuvent éventuellement être ajoutés dans la composition pour jouer le rôle d'adsorbant solide pour les pigments inorganiques et non d'agents viscosants.

La silice et l'alumine ne sont donc pas utilisées dans les compositions de ce document comme agents viscosants inorganiques.

Seul le dérivé de la cellulose tel que l'hydroxypropylcellulose joue le rôle d'agent viscosant et il s'agit-là d'un agent viscosant organique.

Le gel de ce document n'est donc pas un gel minéral et il n'est pas aspirable.

En effet, le gel peut être appliqué au pinceau ou à la taloche, on le laisse en contact avec le graffiti et il est ensuite éliminé par rinçage avec de l'eau à l'aide d'un tuyau ou d'un pinceau et des quantités importantes d'effluents liquides sont ainsi produites

Par ailleurs, dans le cadre de la décontamination nucléaire, des formulations gélifiées qui permettent de s'affranchir des problèmes liés au caractère pulvérulent du déchet sec, et d'accroître l'efficacité du procédé mettant en œuvre un gel ont fait l'objet des documents FR-A1-2 827 530 [8] et FR-A1-2 891470 [9].

Ces documents décrivent des gels colloïdaux inorganiques dits « gels aspirables », spécifiquement formulés pour être pulvérisés, puis pour sécher en se fracturant, tout en piégeant et confinant la contamination radioactive sous forme de paillettes non-pulvérulentes, aspirables, et directement conditionnables et stockables.

Le document [8] décrit un gel constitué d'une solution colloïdale comprenant un agent viscosant inorganique, généralement de la silice ou de l'alumine, un agent actif de traitement qui est par exemple un acide ou une base inorganique telle que la soude ou la potasse, et éventuellement un agent oxydant ayant un potentiel normal d'oxydoréduction E₀ supérieur à 1,4 V en milieu acide fort tel que Ce(IV), Co(III), ou Ag(II).

Le document [9] décrit un gel constitué d'une solution colloïdale comprenant un agent viscosant inorganique, généralement de la silice ou de l'alumine, un tensio-actif, un acide ou une base inorganique, éventuellement un agent oxydant ayant un potentiel normal d'oxydoréduction E₀ supérieur à 1,4 V en milieu acide fort tel que Ce(IV), Co(III), ou Ag(II).

Ces gels colloïdaux inorganiques, du fait des différents constituants entrant dans leur composition ont une rhéologie qui permet leur pulvérisation sur une surface contaminée, puis leur adhésion à cette surface, même verticale, sans couler.

Cela permet ainsi un contact prolongé entre le contaminant et l'agent actif de décontamination, sans que les propriétés mécaniques du substrat ne soient altérées.

Suite à sa pulvérisation, le gel sèche, se fracture, et produit des résidus secs, appelés « paillettes », adhérant au substrat et qui sont par la suite évacués par brossage ou aspiration pour être directement conditionnés.

Les procédés de décontamination qui mettent en œuvre ces gels aspirables sont donc des procédés de décontamination par voie sèche, ne générant aucun effluent liquide et peu de résidus solides secs. En effet, ces résidus solides secs ne représentent en moyenne qu'un quart de la masse de gel initialement pulvérisée. De plus, ces procédés limitent le temps d'exposition des opérateurs à la contamination radioactive, du fait de leur mise en œuvre facile par pulvérisation puis aspiration des résidus secs, et du fait que la présence de l'opérateur n'est pas requise pendant le séchage du gel.

Les gels décrits dans les documents [8] et [9] sont cependant spécifiquement destinés à la décontamination radioactive de surfaces notamment dans le cadre du démantèlement d'installations nucléaires et ne sont, en aucune manière, adaptés à l'élimination de graffitis de surface ou même susceptibles d'être adaptés afin de résoudre le problème extrêmement spécifique de l'élimination de graffitis de surfaces.

Les documents FR-A1-2962046 et WO-A1-2012/001046 [10] concernent un gel de décontamination biologique « aspirable » et un procédé de décontamination biologique de surfaces utilisant ce gel.

Ce gel est constitué par une solution colloïdale comprenant au moins un agent viscosant inorganique, au moins un agent de décontamination biologique, au moins un polymère super-absorbant, au moins un agent tensio-actif, et le reste de solvant.

Les documents FR-A1-3003763 et WO-A1-2014/154818 [11] concernent un gel alcalin oxydant de décontamination biologique « aspirable » et un procédé de décontamination biologique de surfaces utilisant ce gel.

Ce gel est constitué par une solution colloïdale comprenant au moins un agent viscosant inorganique, un agent actif de décontamination biologique constitué par la combinaison d'une base minérale spécifique, telle que la soude, et d'un agent oxydant stable en milieu basique spécifique, tel que l'hypochlorite de sodium, éventuellement un agent tensio-actif, et le reste de solvant. En outre, ce gel ne contient pas de polymère super-absorbant.

Les gels des documents [10] et [11] sont cependant spécifiquement destinés à la décontamination biologique de surfaces notamment à la décontamination dite post-événementielle de surfaces.

Il n'y a aucune mention ni aucune suggestion dans les documents [10] et [11] que les gels de ces documents puissent permettre de résoudre le problème extrêmement spécifique de l'élimination de graffitis de surfaces, qui est un problème totalement différent du problème de la décontamination biologique -notamment post événementielle-du fait de la nature très particulière des graffitis.

Il existe donc au regard de ce qui précède, un besoin pour une composition et un procédé pour éliminer des graffitis de la surface de substrats qui, tout en présentant une efficacité élevée, et au moins aussi élevée que celle des compositions et procédés pour éliminer les graffitis exposés plus haut, ne présentent pas les inconvénients, défauts, limitations et désavantages de ces compositions et procédés et qui résolvent les problèmes des compositions et procédés de l'art antérieur pour éliminer les graffitis.

Cette composition et ce procédé doivent en particulier présenter une efficacité élevée pour éliminer les graffitis quelle que soit la composition de ces graffitis et le matériau de la surface sur laquelle ils ont été apposés.

Cette composition doit être facile à appliquer et à éliminer et produire une quantité limitée de déchets notamment de déchets liquides.

Cette composition doit présenter une toxicité très faible voire nulle.

Il existe notamment un besoin pour une composition et un procédé pour éliminer des graffitis de la surface de substrats qui limite le nombre d'opérateurs nécessaires pour leurs mises en œuvre, ainsi que les actions mécaniques pénibles, fastidieuses, ou demandant une formation accrue des opérateurs.

Le but de la présente invention est de répondre, entre autres, à ces besoins et exigences.

### EXPOSÉ DE L'INVENTION

Ce but, et d'autres encore, sont atteints, conformément à l'invention, par un gel pour éliminer un graffiti sur une surface d'un substrat solide, constitué par une solution colloïdale comprenant, de préférence constituée par :
- 0,1% à 30% en masse, de préférence 0,1% à 25% en masse, de préférence encore 5% à 25% en masse, mieux 8% à 20% en masse, par exemple 10% en masse par rapport à la masse totale du gel, d'au moins un agent viscosant inorganique ;
- 70% à 99,9% en masse, de préférence 75% à 99,9% en masse, de préférence encore 75% à 95% en masse, par exemple 90% en masse, d'un mélange d'acétate d'éthyle et de malonate de diéthyle ou d'un mélange d'acétate d'éthyle et d'acétoacétate de méthyle ;
- éventuellement 0,1% à 2% en masse par rapport à la masse totale du gel, d'au moins un agent tensio-actif;
- et éventuellement de 0,01% à 10% en masse par rapport à la masse du gel, d'au moins un colorant et/ou pigment.

Le terme « gel » est parfaitement clair pour l'homme du métier dans ce domaine de la technique et a déjà été utilisé dans de nombreux brevets.

De la même manière, le terme « agent viscosant » inorganique est parfaitement clair pour l'homme du métier et a déjà été utilisé dans de nombreux brevets.

Tous les composés inorganiques ne rentrent pas dans la définition d'un « agent viscosant ». L'homme du métier n'aura aucun mal à déterminer parmi les composés inorganiques ceux qui sont des agents viscosants. Les agents viscosants peuvent être définis de manière générale comme des agents qui augmentent la viscosité d'un milieu liquide tel qu'une solution auquel ils sont ajoutés afin de former un gel (voir plus loin).

Le gel selon l'invention n'a jamais été décrit dans l'art antérieur.

Le gel selon l'invention est fondamentalement caractérisé par le fait qu'il contient un mélange de solvants spécifiques décrit plus haut.

Ces solvants constituent le principe actif du gel selon l'invention et peuvent être définis comme des agents actifs décapants.

Ces solvants du gel selon l'invention, sont peu (voire non) toxiques, nocifs.

En d'autres termes, selon l'invention, on a pris le plus grand soin que les solvants du gel soient spécifiquement choisis parmi les solvants les moins toxiques, et les moins nocifs, voire non toxiques, et non nocifs, afin vue de protéger les opérateurs qui mettent en œuvre le gel selon l'invention.

Il s'agit-là d'une caractéristique qui différencie fondamentalement le gel selon l'invention des gels anti-graffitis de l'art antérieur dans lesquels des solvants, par exemple des essences, toxiques ou nocifs sont mis en œuvre.

Ces solvants du gel selon l'invention sonten outre des solvants qui dégage une odeur qui n'est pas ou peu nauséabonde, ou désagréable.

En d'autres termes, on a pris le plus grand soin que les solvants du gel selon l'invention soient choisis parmi les solvants dont l'odeur est la moins nauséabonde, la moins désagréable, voire pas du tout nauséabonde ou désagréable.

Autrement dit, les solvants du gel selon l'invention sont choisis parmi les solvants qui présentent une « puanteur » limitée voire nulle.

Le mélange de solvants du gel selon l'invention possède en outre généralement une volatilité compatible avec une bonne durée de séchage du gel, c'est-à-dire une volatilité qui garantit une vitesse de séchage pas trop élevée, et donc une durée de séchage suffisante pour assurer une élimination efficace des graffitis, par exemple une durée de séchage égale ou supérieure à 1 heure, notamment voisine d'une heure.

L'acétate d'éthyle a une volatilité élevée, et donne des gels qui sèchent trop vite, et ne permettent pas lorsqu'ils sont utilisés seuls dans un gel d'obtenir une durée de séchage suffisante.

L'acétate d'éthyle qui a une volatilité élevée est donc selon l'invention utilisé en combinaison, en mélange avec un autre solvant qui a une volatilité faible afin d'obtenir un durée de séchage suffisante.

C'est justement la combinaison d'un tel solvant à volatilité élevée avec un autre solvant de volatilité inférieure qui permet de « freiner » le séchage du gel et d'atteindre une bonne durée de séchage, une durée de séchage suffisante.

De la même manière, on fait en sorte que la volatilité du mélange de solvants soit telle que le gel ne sèche pas trop lentement et que sa durée de séchage ne soit pas trop longue et n'excède pas par exemple 4 heures.

L'homme du métier peut facilement identifier, parmi les solvants du gel selon l'invention mentionnés plus haut les solvants ayant une volatilité faible, et les solvants ayant une volatilité élevée.

De manière étonnante, et bien que les solvants du gel selon l'invention soient choisis parmi les solvants peu (voire non) toxiques, nocifs, ces solvants, en mélange, présentent cependant une efficacité élevée pour éliminer les graffitis quelle que soit la substance qui les constitue, par exemple peinture ou encre.

En particulier, ces solvants présentent une efficacité élevée pour éliminer les graffitis, tags en peinture de bombe aérosol.

Le gel selon l'invention comprend un mélange d'acétate d'éthyle et de malonate de diéthyle ou un mélange d'acétate d'éthyle et d'acétoacétate de méthyle, de préférence dans des proportions en masse de 20% à 99%, de préférence de 50% à 99%, par exemple 80% d'acétate d'éthyle, et de 1% à 80%, de préférence de 1% à 50%, par exemple 20% de malonate de diéthyle ou d'acétoacétate de méthyle.

Lorsque le gel comprend un tel mélange de solvants, ce mélange représente généralement de 60% à 99% en masse, par exemple 90% en masse de la masse du gel, et l'agent viscosant est de préférence de l'alumine à raison de 0,1% à 30% en masse, par exemple 10% en masse de la masse du gel.

Il s'est avéré (voir exemple 1) que le mélange d'acétate d'éthyle et de malonate de diéthyle permet de manière étonnante d'obtenir un gel qui présente une durée de séchage raisonnable, à savoir par exemple de 1 à 4h, et qui est aussi très efficace.

Le gel selon l'invention est un gel aspirable qui possède toutes les propriétés avantageuses - mentionnées plus haut- inhérentes aux gels dits gels aspirables tels que les gels des documents [8], [9], [10], et [11], à la différence fondamentale toutefois que, avec le gel selon l'invention, on ne déplace pas des contaminants vers des paillettes de gel sec, mais qu'on élimine un graffiti, tag indésirable -généralement en peinture- d'un support, et que la composition du gel est donc adaptée en conséquence.

Comme on l'a indiqué plus haut, les gels de ces documents sont des gels aqueux spécifiquement conçus pour la décontamination radioactive ou biologique de surfaces et dont les solvants et l'agent actif de décontamination sont totalement différents de ceux du gel selon l'invention.

Il n'y a aucune indication dans les documents [8], [9], [10], et [11], qui pourrait conduire l'homme du métier à modifier d'une manière aussi conséquente les gels de ces documents afin de les utiliser pour éliminer les graffitis.

Le gel selon l'invention est un gel colloïdal dont le principe actif permet l'élimination des tags et graffitis, et dont la rhéologie est adaptée à l'application, de préférence par pulvérisation sur des surfaces taguées.

C'est là un des avantages du gel selon l'invention que de pouvoir être appliqué très aisément, par pulvérisation.

Le gel selon l'invention sèche progressivement, prolongeant le temps de contact entre l'actif décapant et la peinture, et forme des paillettes qui se détachent aisément de la surface par brossage/aspiration -d'où le nom de gel aspirable- emportant ainsi la peinture ou encre indésirable et cela sans altérer le matériau du substrat, et même la peinture originale de ce matériau.

L'opérateur de nettoyage peut ainsi laisser le gel agir sur la peinture des graffitis tout en allant traiter d'autres surfaces, sans avoir à être présent physiquement lors du séchage ou à frotter laborieusement la peinture à l'aide d'un solvant.

En résumé, les gels selon l'invention répondent donc à l'ensemble des besoins mentionnés plus haut, ils ne présentent pas les inconvénients, défauts, limitations et désavantages des compositions anti-graffitis de l'art antérieur, telles que celles décrites dans les documents mentionnés plus haut et présentent toutes les propriétés avantageuses connues des gels dits gels « aspirables ».

Le gel selon l'invention, bien qu'il contienne un agent viscosant généralement exclusivement inorganique, minéral, sans agent viscosant inorganique minéral, peut être qualifié de gel organique.

En effet, la teneur en matières organiques du gel selon l'invention est élevée, au moins égale à 70% en masse, par exemple égale à 90% en masse, car il contient au moins 70% en masse, par exemple 90% en masse de solvants organiques.

Le gel selon l'invention est une solution colloïdale, ce qui signifie que le gel selon l'invention contient des particules solides inorganiques, minérales, d'agent viscosant dont les particules élémentaires, primaires, ont une taille généralement de 2 à 200 nm. Ces particules solides, minérales, inorganiques jouent le rôle de viscosant pour permettre à la solution de se gélifier et ainsi d'adhérer à la surface à traiter, quelle que soit sa géométrie, sa forme, sa taille, et où que se trouvent les graffitis à éliminer.

Le gel selon l'invention peut généralement, de préférence être qualifié de gel « aspirable », à savoir qui donne des résidus secs, pouvant être aspirés, et pulvérisable, à savoir qui peut être pulvérisé, appliqué par un procédé de pulvérisation.

Pour qu'un gel puisse être appliqué par un procédé de pulvérisation, il faut qu'il possède les propriétés d'un fluide rhéofluidifiant (à savoir avec une viscosité qui diminue avec le taux de cisaillement), qu'il soit thixotrope (à savoir avec une viscosité qui évolue au cours du temps) avec un temps de reprise très court, et qu'il ait une contrainte seuil.

En effet, le gel doit posséder une viscosité très faible à très fort cisaillement pour posséder le comportement d'un liquide lors de la pulvérisation.

Puis, il doit être thixotrope afin de retrouver une viscosité forte après la pulvérisation, et finalement il doit avoir une valeur suffisamment importante de la contrainte seuil (typiquement supérieure à 15-20 Pa) avec un temps de reprise court (généralement inférieur à la seconde) qui permettra au gel de ne pas s'écouler sous l'effet de la gravité sur une paroi verticale (pour des épaisseurs de préférence comprises entre 0,5 et 2mm). Pour que le gel soit ensuite considéré comme aspirable, il doit sécher dans un temps raisonnable de quelques heures (voir plus loin) puis se fracturer en produisant des paillettes non pulvérulentes de taille millimétrique (voir plus loin) pouvant être facilement aspirées.

Avantageusement, l'agent viscosant inorganique peut être choisi parmi les oxydes de métaux tels que les alumines, les oxydes de metalloïdes tels que les silices, les hydroxydes de métaux, les hydroxydes de metalloïdes, les oxyhydroxydes de métaux, les oxyhydroxydes de métalloïdes, les aluminosilicates, les argiles telles que la smectite, et leurs mélanges.

En particulier, l'agent viscosant inorganique peut être choisi parmi les alumines (Al₂O₃) et les silices (SiO₂).

L'agent viscosant inorganique peut ne comprendre qu'une seule silice ou alumine ou un mélange de celles-ci, à savoir un mélange de deux silices différentes ou plus (mélange SiO₂/SiO₂), un mélange de deux alumines différentes ou plus (mélange Al₂O₃/Al₂O₃), ou encore un mélange d'une ou plusieurs silices avec une ou plusieurs alumines (mélange SiO₂/Al₂O₃).

Avantageusement, l'agent viscosant inorganique peut être choisi parmi les silices pyrogénées, les silices précipitées, les silices hydrophiles, les silices hydrophobes, les silices acides, les silices basiques comme la silice Tixosil® 73, commercialisée par la société RHODIA, et leurs mélanges.

Parmi les silices acides, on peut notamment citer les silices pyrogénées ou fumées de silice "Cab-O-Sil"® M5, H5 ou EH5, commercialisées par la société CABOT, et les silices pyrogénées commercialisées par la société EVONIK INDUSTRIES sous l'appellation AEROSIL®.

Parmi ces silices pyrogénées, on préférera encore la silice AEROSIL® 380 d'une surface spécifique de 380 m²/g qui offre les propriétés viscosantes maximales pour une charge minérale minimale.

La silice utilisée peut aussi être une silice dite précipitée obtenue par exemple par voie humide par mélange d'une solution de silicate de soude et d'un acide. Les silices précipitées préférées sont commercialisées par la société EVONIK® INDUSTRIES sous le nom de SIPERNAT® 22 LS et FK 310 ou encore par la société RHODIA sous le nom de TIXOSIL® 331, cette dernière est une silice précipitée dont la surface spécifique moyenne est comprise entre 170 et 200 m²/g.

Avantageusement, l'agent viscosant inorganique est constitué par un mélange d'une silice précipitée et d'une silice pyrogénée.

L'alumine peut être choisie parmi les alumines calcinées, les alumines calcinées broyées, et leurs mélanges.

A titre d'exemple, on peut citer le produit vendu par la société EVONIK® INDUSTRIES sous la désignation commerciale « Aeroxide Alumine C » qui est de l'alumine fine pyrogénée.

De manière avantageuse, selon l'invention, l'agent viscosant inorganique est constitué par une ou plusieurs alumine(s) représentant généralement de 5% à 30% en masse par rapport à la masse du gel.

Dans ce cas, l'alumine est de préférence à une concentration de 7% à 15% en masse par rapport à la masse totale du gel pour assurer un séchage du gel à température comprise entre 20°C et 50°C et à une humidité relative comprise entre 20% et 60% en moyenne en 30 minutes à 5 heures.

La nature de l'agent viscosant minéral, notamment lorsqu'il est constitué d'une ou plusieurs alumine(s), influence de manière inattendue le séchage du gel selon l'invention et la granulométrie du résidu obtenu.

En effet, le gel sec se présente sous la forme de particules de taille contrôlée, plus précisément de paillettes solides millimétriques, dont la taille va généralement de 1 à 10 mm, de préférence de 2 à 5 mm grâce notamment aux compositions précitées de la présente invention, en particulier lorsque l'agent viscosant est constitué par une ou plusieurs alumine(s).

Précisons que la taille des particules correspond généralement à leur plus grande dimension.

En d'autres termes, les particules solides minérales du gel selon l'invention, par exemple de type silice ou alumine, outre leur rôle de viscosant, jouent également un rôle fondamental lors du séchage du gel car elles assurent la fracturation du gel pour aboutir à un déchet sec sous forme de paillettes.

Le gel peut éventuellement aussi contenir un agent tensio-actif ou un mélange d'agents tensio-actifs, de préférence choisis parmi la famille des agents tensio-actifs non ioniques tels que les copolymères blocs, séquencés, comme les copolymères séquencés d'oxyde d'éthylène et d'oxyde de propylène, et les acides gras éthoxylés ; et leurs mélanges.

Pour ce type de gel, les agents tensio-actifs sont de préférence des copolymères blocs commercialisés par la société BASF sous la dénomination PLURONIC®.

Les Pluronics® sont des copolymères séquencés d'oxyde d'éthylène et d'oxyde de propylène.

Ces agents tensio-actifs influencent les propriétés rhéologiques du gel, notamment le caractère thixotropique du produit et son temps de reprise et évitent l'apparition de coulure.

Les agents tensio-actifs permettent, par ailleurs, de maîtriser l'adhésion du déchet sec, et de contrôler la taille des paillettes de résidu sec pour garantir la non-pulvérulence du déchet.

Avantageusement, le gel selon l'invention peut comprendre en outre au moins un pigment minéral.

Lorsqu'il est présent, le pigment minéral représente de 0,01% à 10%, de préférence de 0,1% à 5% en masse de la masse totale du gel.

L'invention concerne, en outre, un procédé pour éliminer un graffiti sur une surface d'un substrat solide, dans lequel on réalise au moins un cycle comprenant les étapes successives suivantes :
a) on applique le gel selon l'invention, tel qu'il a été décrit plus haut, sur ladite surface ;
b) on maintient le gel sur la surface au moins pendant une durée suffisante pour que le gel élimine le graffiti, et pour que le gel sèche et forme un résidu sec et solide non pulvérulent contenant des composés résultant de l'élimination du graffiti;
c) on élimine le résidu sec et solide contenant les composés résultant de l'élimination du graffiti.

Le substrat solide peut être un substrat poreux, de préférence un substrat minéral poreux.

L'efficacité du gel et du procédé selon l'invention est tout aussi bonne en présence d'une surface non poreuse et/ou non minérale qu'en présence d'une surface poreuse et/ou minérale.

Avantageusement, le substrat est en au moins un matériau choisi parmi les métaux et alliages comme l'acier inoxydable, l'acier galvanisé, ou le zinc ; les aciers peints ; les polymères organiques tels que les matières plastiques ou caoutchoucs comme les poly(chlorure de vinyle)s ou PVC, les polypropylènes ou PP, les polyéthylènes ou PE, notamment les polyéthylènes haute densité ou HDPE, les poly(méthacrylate de méthyle)s ou PMMA, les poly(fluorure de vinylidène)s ou PVDF, les polycarbonates ou PC; les verres ; les matériaux cimentaires comme les pâtes, les ciments, les mortiers et les bétons ; les plâtres ; les briques ; les tuiles ; la terre crue ou cuite ; les pierres naturelles ou artificielles ; les enduits ; la fibre de verre, les fibrociments ; l'asphalte ; le goudron ; l'ardoise ; les matériaux à base de cellulose comme le bois ; et les céramiques.

Généralement, le graffiti comprend une peinture notamment une peinture de bombe aérosol, une encre, ou un mélange de ceux-ci.

Avantageusement, le gel est appliqué sur la surface sur laquelle se trouve le graffiti à raison de 100 g à 2000 g de gel par m² de surface, de préférence de 500 à 1500 g de gel par m² de surface, de préférence encore de 600 à 1000 g de gel par m² de surface, ce qui correspond généralement à une épaisseur de gel déposé sur la surface comprise entre 0,1 mm ou 0,5 mm et 2 mm.

Avantageusement, le gel est appliqué sur la surface solide par pulvérisation, au pinceau ou avec une taloche.

Avantageusement (lors de l'étape b)), le séchage est réalisé à une température de 1°C à 50°C, de préférence de 15°C à 25°C, et sous une humidité relative de 20% à 80%, de préférence de 20% à 70%.

Avantageusement, le gel est maintenu sur la surface pendant une durée de 30 minutes à 72 heures, de préférence de 1 à 48 heures, de préférence encore de 1 à 24 heures, mieux de 1 à 5 heures, par exemple de 1 à 4 heures.

Avantageusement, le résidu sec et solide se présente sous la forme de particules, par exemple de paillettes, d'une taille de 1 à 10 mm, de préférence de 2 à 5 mm.

Avantageusement, le résidu sec et solide est éliminé de la surface solide par brossage et/ou aspiration.

Avantageusement, le cycle décrit plus haut peut être répété par exemple de 1 à 10 fois en utilisant le même gel lors de tous les cycles ou en utilisant des gels différents lors d'un ou de plusieurs cycle(s).

Avantageusement, lors de l'étape b), le gel, avant séchage total, est remouillé avec un solvant, de préférence avec le solvant du gel appliqué lors de l'étape a) ce qui évite alors généralement de répéter l'application du gel sur la surface et occasionne une économie de réactif et une quantité de déchet limitée. Cette opération de remouillage peut être répétée par exemple de 1 à 10 fois.

Le procédé selon l'invention possède toutes les propriétés avantageuses inhérentes au gel de décontamination qu'il met en œuvre et qui ont déjà été largement exposées plus haut.

Le procédé selon l'invention permet la gestion curative efficace des tags, graffitis indésirables tout en étant beaucoup moins pénible et beaucoup moins coûteux que les procédés classiques de nettoyage de ces tags, à savoir :
- les procédés mettant en œuvre des moyens haute pression, qui sont coûteux et « techniques » (complexes),
- les procédés mettant en œuvre des lingettes imbibées de solvants nocifs dont l'utilisation est longue et laborieuse,
- les procédés mettant en œuvre des films protecteurs qui sont coûteux en temps et en hommes.

Ainsi, le gel selon l'invention peut être pulvérisé à l'aide un simple pistolet à peinture trouvé dans le commerce tandis que les appareils de sablage, par exemple, nécessitent des réglages et une formation particulière. Ces appareils de sablage sont complexes et leur maintenance est couteuse.

De plus, le procédé selon l'invention est un procédé par voie sèche qui évite les épanchements de dissolvant ou de décapant tout en optimisant le temps de travail de l'opérateur de nettoyage. En effet, celui-ci est capable de traiter plusieurs zones à la fois rapidement, du fait du temps de séchage du gel et de sa mise en œuvre avantageusement par pulvérisation.

En résumé, le procédé et le gel selon l'invention présentent entre autres, outre les propriétés avantageuses spécifiquement dues au solvant spécifique contenu dans le gel, les autres propriétés avantageuses suivantes :
- l'application du gel de préférence par pulvérisation, ce qui n'est pas possible avec la plupart des gels anti-graffitis de l'art antérieur décrits plus haut. La pulvérisation permet de traiter rapidement et facilement de grandes surfaces et nécessite moins d'opérateurs,
- l'adhérence aux parois,
- l'obtention de l'efficacité maximale d'élimination des graffitis à l'issue de la phase de séchage du gel, y compris en situation de graffitis pénétrant notamment dans le cas de surfaces poreuses.

En général, on fait en sorte que le temps de séchage soit supérieur ou égal à la durée nécessaire pour éliminer le graffiti. Dans le cas de graffitis profonds, on fait généralement appel à un remouillage.
- le traitement d'une gamme très large de matériaux (voir exemple 2),
- l'absence d'altération mécanique ou physique des matériaux à l'issue du traitement,
- la mise en œuvre du procédé dans des conditions climatiques variables (voir exemples),
- la réduction du volume de déchet,
- la facilité de récupération du déchet sec.

Les exemples fournis plus loin montrent que le gel selon l'invention du fait de sa formulation spécifique et de sa mise en œuvre simple, fiable et facile, est efficace pour l'élimination d'une grande variété de graffitis indésirables sur une grande variété de matériaux.

D'autres caractéristiques et avantages de l'invention apparaîtront mieux à la lecture de la description détaillée qui suit, cette description étant faite à titre illustratif et non limitatif, en liaison avec les dessins joints.

### BRÈVE DESCRIPTION DES DESSINS

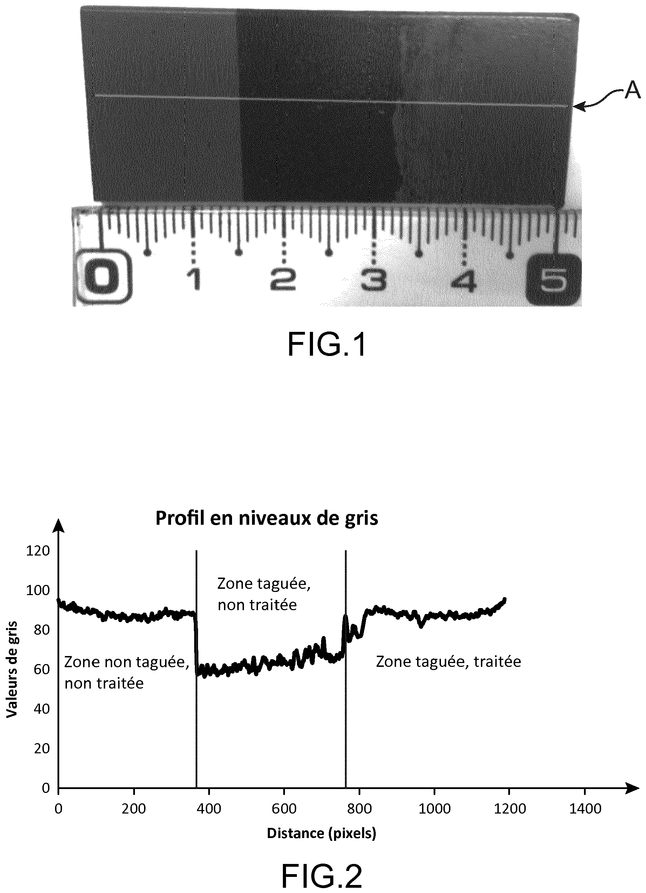

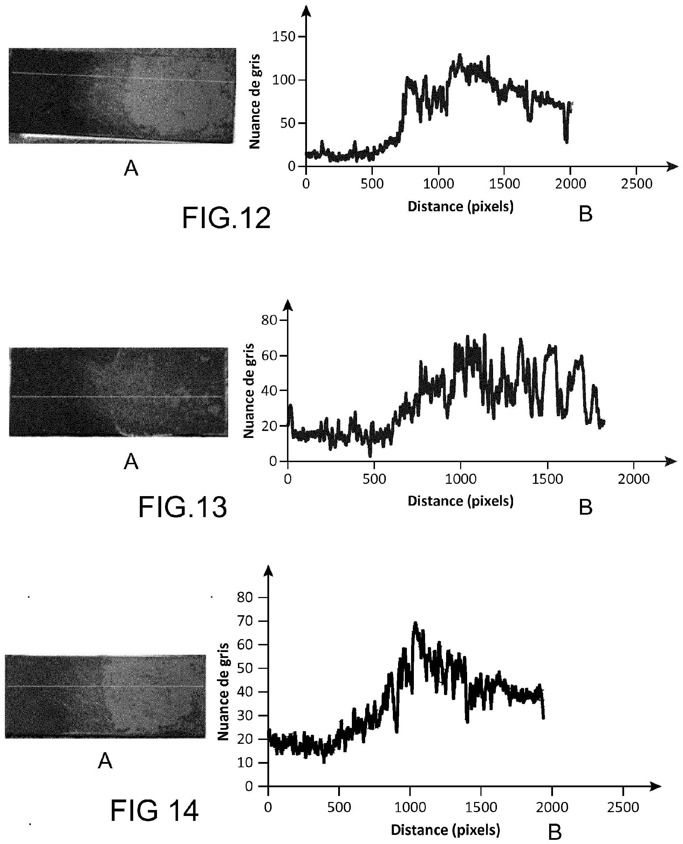

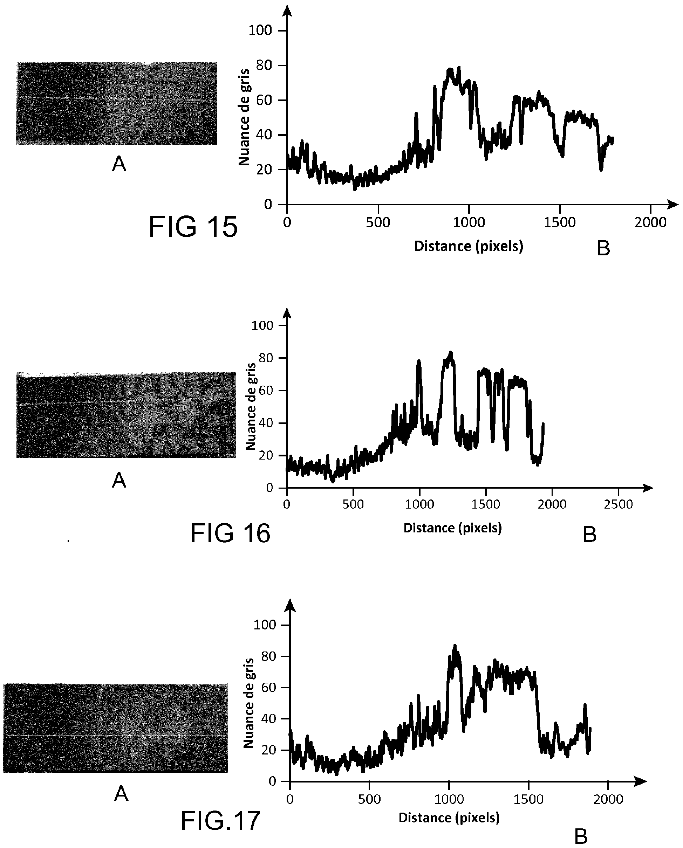

- La Figure 1 est une photographie de la surface de la plaque d'acier peint taguée testée à la fin de l'essai de l'exemple 1, conforme à l'invention, au cours duquel on évalue l'efficacité d'un gel selon l'invention dont l'agent actif est un mélange d'acétate d'éthyle et de malonate de diéthyle pour éliminer un graffiti, « tag » déposé sur cette plaque en acier peint.
   La surface de cette plaque, comprend, de gauche à droite, une première partie vierge où ni tag ni gel n'a été déposé, une deuxième partie où le « tag » a été appliqué, mais n'a pas été traité par le gel, une troisième partie où le gel a été appliqué sur le tag puis les paillettes de gel sec brossées.
- La Figure 2 est un graphique qui montre le profil en niveau de gris, selon la ligne A représentée sur la photographie de la Figure 1, obtenu à partir d'une analyse d'image de cette photographie, réalisée à l'aide du logiciel ImageJ.
   En abscisse est portée la distance (en pixels) et en ordonnée sont portées les valeurs de gris (nuances de gris).
- La Figure 3 est un graphique qui montre le profil de rugosité mesuré par un profilomètre optique STIL de la plaque d'acier peint tagué à la fin de l'essai de l'exemple 1, conforme à l'invention.
   En abscisse est portée la course (en mm), et en ordonnée est portée l'altitude (en µm).
- Les Figures 4 (A,B) à 8 (A,B) sont des graphiques qui montrent les profils en niveau de gris (Figures 4B à 8B), selon une ligne tracée de la même manière que sur la photographie de la Figure 1, obtenus à partir d'une analyse d'image réalisée à l'aide du logiciel ImageJ de photographies (Figures 4A à 8A) de la surface des plaques en divers matériaux taguées testées à la fin des essais de l'exemple 2, conforme à l'invention.
   Ces matériaux sont l'acier inoxydable (Figure 4), l'acier peint (voir exemple 1), le verre (Figure 5), la céramique (Figure 6), le béton (Figure 7), et une matière plastique : le PVC (Figure 8).
   Au cours de ces essais, on évalue l'efficacité d'un gel selon l'invention qui est le gel selon l'exemple 1, pour éliminer un graffiti, « tag » déposé sur les divers matériaux.

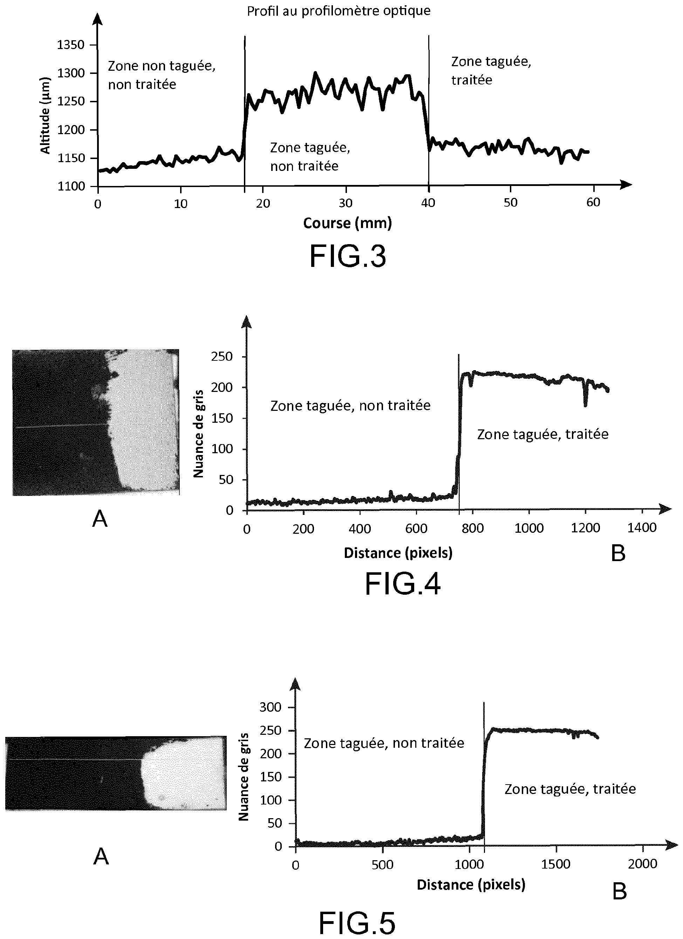

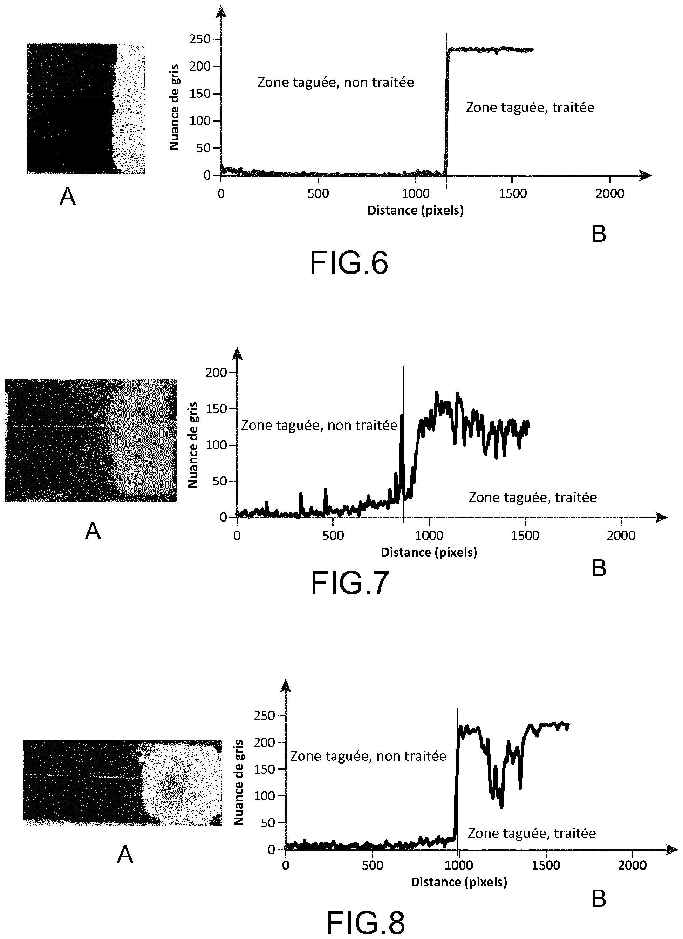

   Sur les Figures 4B à 8B : en abscisse est portée la distance (en pixels) et en ordonnée sont portées les valeurs de gris.

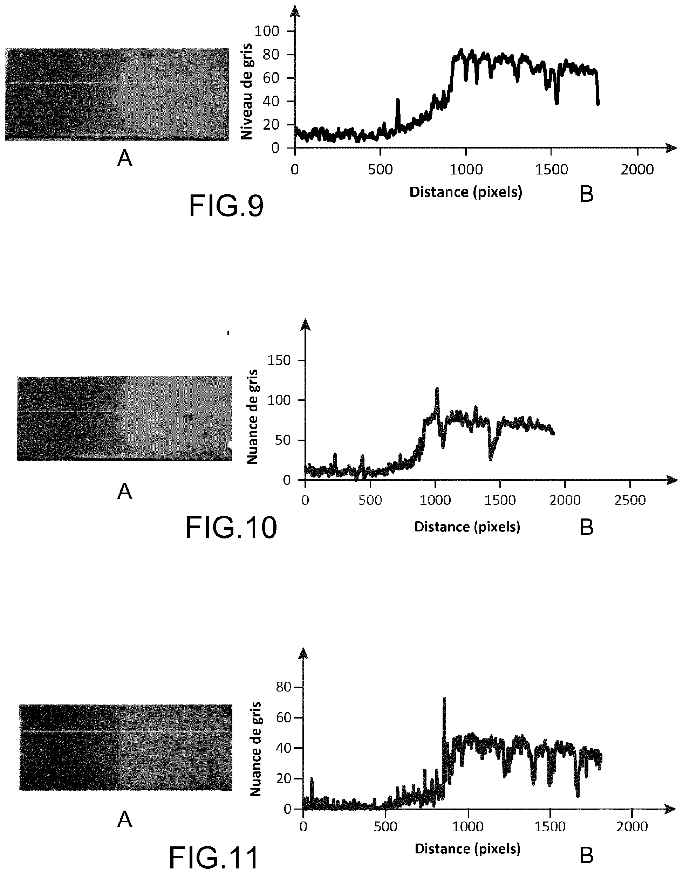

- Les Figures 9 (A,B) à 16 (A,B) sont des graphiques qui montrent le profil en niveau de gris (Figures 9B à 16B), selon une ligne tracée de la même manière que sur la photographie de la Figure 1, obtenu à partir d'une analyse d'image réalisée à l'aide du logiciel ImageJ d'une photographie (Figures 9A à 16A) de la surface de la plaque d'acier peint tagué testée à la fin de chacun des essais de l'exemple 4, non conforme à l'invention et donné à titre d'information.
   Au cours de ces essais, on évalue l'efficacité d'un gel dont l'agent actif est respectivement l'acétate d'éthyle (Figure 9), le lévulinate d'éthyle (Figure 10), l'acétyl acétone (Figure 11), le lévulinate de méthyle (Figure 12), l'acétoacétate de méthyle (Figure 13), l'acétoacétate d'éthyle (Figure 14), le succinate de diméthyle (Figure 15), le malonate de diéthyle (Figure 16), pour éliminer un graffiti, « tag » déposé sur cette plaque en acier peint.
   Sur les Figures 9B à 16B : en abscisse est portée la distance (en pixels) et en ordonnée sont portées les valeurs de gris.
- La Figure 17 (A,B) est un graphique qui montre le profil en niveau de gris (Figure 17B), selon une ligne tracée de la même manière que sur la photographie de la Figure 1, obtenu à partir d'une analyse d'image réalisée à l'aide du logiciel ImageJ d'une photographie (Figure 17A) de la surface de la plaque d'acier peint tagué testée à la fin de l'essai de l'exemple 5, conforme à l'invention.
   Au cours de cet essai, on évalue l'efficacité d'un gel selon l'invention dont l'agent actif est un mélange d'acétate d'éthyle et d'acétoacétate de méthyle pour éliminer un graffiti, « tag » déposé sur cette plaque en acier peint.
   Sur la Figure 17B : en abscisse est portée la distance (en pixels) et en ordonnée sont portées les valeurs de gris.

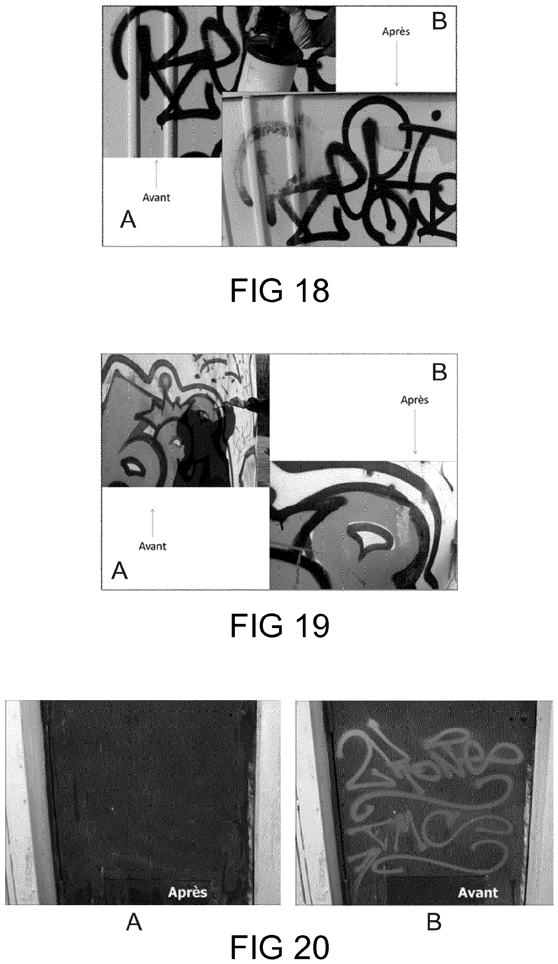

- La Figure 18 montre des photographies d'un transformateur électrique en acier laqué souillé par des graffitis avant (Figure 18A), et après (Figure 18B) traitement de ces graffitis par application d'un gel non conforme à l'invention, composé de 89% en masse d'acétylacétone et de 11% en masse d'alumine (exemple 6).
- La Figure 19 montre des photographies d'une pile de pont en béton souillée par des graffitis avant (Figure 19A), et après (Figure 19B) traitement de ces graffitis par application d'un gel non conforme à l'invention, composé de 89% en masse d'acétylacétone et
   de 11% en masse d'alumine (exemple 6).
- La Figure 20 montre des photographies d'une porte métallique peinte souillée par des graffitis avant (Figure 20B), et après (Figure 20A) traitement de ces graffitis par application du gel de référence selon l'invention décrit dans l'exemple 1, conforme à l'invention.

### EXPOSÉ DÉTAILLÉ DE MODES DE RÉALISATION PARTICULIERS

Le gel selon l'invention peut être facilement préparé à la température ambiante.

Par exemple, le gel selon l'invention peut être préparé en ajoutant de préférence progressivement, le ou les agent(s) viscosant(s) inorganique(s), par exemple la ou les alumine(s) et/ou la ou les silice(s), au mélange des solvants, ou au mélange des solvants et du ou des adjuvant(s) éventuel(s). Les adjuvants éventuels sont généralement le(s) tensio-actif(s), le ou les pigment(s) minéraux.

Ce mélange des solvants et du ou des adjuvant(s) éventuel(s) peut être réalisé par agitation mécanique, par exemple au moyen d'un agitateur mécanique équipé d'une hélice à trois pales. La vitesse de rotation est par exemple de 200 tours/minute, et la durée de l'agitation est par exemple de 3 à 5 minutes.

L'addition du ou des agent(s) viscosant(s) inorganique(s) au mélange des solvants, ou au mélange des solvants et du ou des adjuvant(s) éventuel(s) peut être réalisée en versant simplement le ou les agent(s) viscosant(s) dans ledit mélange des solvants ou ledit mélange des solvants et du ou des adjuvant(s) éventuel(s).

Lors de l'addition du ou des agent(s) viscosant(s) inorganique(s), au mélange des solvants, ou au mélange des solvant(s) et du ou des adjuvant(s) éventuel(s), ce mélange des solvants ou ce mélange des solvants et du ou des adjuvant(s) éventuel(s) sont généralement maintenus sous agitation mécanique.

Cette agitation peut être, par exemple, réalisée au moyen d'un agitateur mécanique équipé d'une hélice à trois pales.

La vitesse d'agitation est généralement augmentée graduellement au fur et à mesure que la viscosité de la solution augmente, pour atteindre finalement une vitesse d'agitation comprise par exemple entre 400 et 600 tours/minute, sans qu'il n'y ait eu de projections.

Après la fin de l'ajout du ou des viscosant(s) minéral (aux), l'agitation est encore poursuivie, par exemple pendant 2 à 5 minutes, de manière à obtenir un gel parfaitement homogène.

Il est bien évident que d'autres protocoles de préparation des gels utilisés selon l'invention peuvent être mis en œuvre avec une addition des composants du gel dans un ordre différent de celui mentionné plus haut.

Généralement, le gel utilisé selon l'invention doit présenter une viscosité inférieure à 200 mPa.s sous un cisaillement de 1000 s⁻¹ de manière à permettre la pulvérisation sur la surface à décontaminer, à distance (par exemple à une distance de 1 à 5 m) ou à proximité (par exemple à une distance inférieure à 1 m, de préférence de 50 à 80 cm). Le temps de reprise de la viscosité doit généralement être inférieur à une seconde et la viscosité sous faible cisaillement supérieure à 10 Pa.s pour ne pas couler sur une paroi.

Il est à noter que l'agent tensio-actif éventuel du gel selon l'invention influence favorablement et notablement les propriétés rhéologiques du gel utilisé selon l'invention. Ce tensio-actif permet notamment que le gel utilisé selon l'invention puisse être mis en œuvre par pulvérisation et évite les risques d'épandage ou de coulure lors du traitement des surfaces verticales et des plafonds. Ce tensio-actif permet également de limiter le phénomène de ressuage observé lors de la conservation du gel.

Le gel ainsi préparé est ensuite appliqué sur la surface solide à nettoyer d'un substrat en un matériau solide.

Par surface à nettoyer, on entend une surface solide sur laquelle se trouve un graffiti, « tag » que l'on souhaite éliminer.

Il n'existe quasiment aucune limitation quant au matériau qui constitue la surface à nettoyer, en effet le gel selon l'invention permet de traiter sans aucun endommagement, toutes sortes de matériaux même fragiles.

Le gel selon l'invention ne génère aucune altération, érosion, attaque, chimique, mécanique ou physique du matériau traité. Le gel selon l'invention n'est donc en aucune manière préjudiciable à l'intégrité des matériaux traités et permet même leur réutilisation. Ainsi, les monuments, bâtiments, œuvres d'art telles que des sculptures, traités par le gel selon l'invention ne sont absolument pas dégradés et voient leur intégrité visuelle et structurale conservée.

Ce matériau du substrat peut donc être choisi parmi les matériaux déjà énumérés plus haut, par exemple parmi les métaux ou alliages comme l'acier inoxydable, les polymères tels que les matières plastiques ou caoutchoucs parmi lesquels on peut citer les PVC, PP, PE notamment HDPE, PMMA, PVDF, PC, les verres, les ciments, mortiers et bétons, les plâtres, les briques, la pierre naturelle ou artificielle, les enduits, les céramiques.

La surface traitée peut être peinte ou non peinte.

Dans tous les cas (voir Exemple 2, et Figures 4 à 8 et 1 à 3), quel que soit le matériau, par exemple acier inoxydable, acier peint, laqué, verre, céramique, béton, PVC, l'efficacité du nettoyage selon l'invention est totale.

Il n'existe également aucune limitation quant à la forme, la géométrie et la taille de la surface à nettoyer, le gel selon l'invention permet en effet le traitement de surfaces de grande taille, de géométries complexes, présentant par exemple des creux, angles, recoins.

Le gel selon l'invention assure le traitement efficace non seulement de surfaces horizontales, mais aussi de surfaces verticales telles que des murs, façades, piles de ponts, portes, ou de surfaces inclinées ou en surplomb telles que des plafonds.

Le gel selon l'invention garantit également une élimination complète et efficace des graffitis quelle que soit la peinture, encre ou autre qui constitue ces graffitis, quelle que soit la couleur de ces graffitis et quel que soit le colorant ou pigment qu'ils contiennent (voir Exemple 3). Le gel selon l'invention permet notamment l'élimination efficace des graffitis, tags, en peinture de bombe aérosol.

L'efficacité du gel selon l'invention a été démontrée sur des graffitis réels sur divers substrats (Exemple 6, Figures 18 à 20).

Par rapport aux techniques existantes qui mettent en œuvre des liquides tels que des solutions, l'invention met en œuvre un gel, ce qui est particulièrement avantageux pour le traitement de matériaux de grande surface, non transportables et implantés à l'extérieur. En effet, le procédé selon l'invention du fait de la mise en œuvre d'un gel, permet le nettoyage *in situ* en évitant l'épandage de solutions chimiques dans l'environnement et la dispersion des espèces contaminantes.

Le gel selon l'invention peut être appliqué sur la surface à traiter par tous les procédés d'application connus de l'homme du métier.

Des procédés classiques sont la pulvérisation par exemple au pistolet, ou l'application au moyen d'un pinceau, ou d'une taloche.

Pour l'application par pulvérisation du gel sur la surface à traiter, la solution colloïdale peut par exemple être véhiculée par l'intermédiaire d'une pompe basse pression, par exemple une pompe qui met en œuvre une pression inférieure ou égale à 7 bar, soit environ 7.10⁵ Pascals.

L'éclatement du jet de gel sur la surface peut être obtenu par exemple au moyen d'une buse à jet plat ou à jet rond.

La distance entre la pompe et la buse peut être quelconque, par exemple elle peut être de 1 à 50 m, notamment de 1 à 25 m.

Le temps de reprise de la viscosité suffisamment court des gels utilisés selon l'invention permet aux gels pulvérisés d'adhérer à toutes les surfaces, par exemple à des parois.

La quantité de gel déposé sur la surface à traiter est généralement de 100 à 2000 g/m², de préférence de 500 à 1500 g/m², de préférence encore de 600 à 1000 g/m².

La quantité de gel déposé par unité de surface et, par voie de conséquence, l'épaisseur du gel déposé influence la vitesse de séchage.

Ainsi, lorsque l'on pulvérise un film, couche de gel d'une épaisseur de 0,5 mm à 2 mm sur la surface à traiter, le temps de séchage, qui est alors généralement le temps de contact efficace, est suffisant à un bon traitement de la surface conduisant à une élimination du graffiti. Le temps de contact efficace est la période pendant laquelle le principe actif contenu dans le gel qui n'est autre que le mélange des solvants va interagir avec le graffiti.

Le temps de séchage n'est pas uniquement lié à l'épaisseur de la couche de gel appliquée, mais aussi aux conditions climatiques, à savoir l'humidité relative et la température.

L'homme du métier pourra facilement déterminer, en fonction des conditions climatiques, et dans la plage d'épaisseur de 0,5 mm à 2 mm mentionnée plus haut, l'épaisseur de la couche de gel à appliquer sur les graffitis afin que le gel soit efficace et que les graffitis soient éliminés.

Ainsi si l'on se trouve à 20% d'humidité relative HR, et à 40°C, il est possible que le séchage d'une couche de gel d'une épaisseur de 0,5 mm appliquée sur un graffiti soit trop rapide pour permettre une élimination efficace de ce graffiti. Au contraire, si l'on se trouve à 15°C, et à 50% HR. Le séchage d'une couche de la même épaisseur du même gel permet une élimination efficace de ce même graffiti.

En outre, il a été montré de manière surprenante que la quantité de gel déposé lorsqu'elle se situe dans les plages mentionnées plus haut et en particulier lorsqu'elle est supérieure à 500 g/m² et notamment dans la plage de 500 à 1500 g/m², ce qui correspond à une épaisseur minimale de gel déposé par exemple supérieure à 500 µm pour une quantité de gel déposé supérieure à 500 g/m², permettait après séchage du gel d'obtenir une fracturation du gel sous la forme de paillettes millimétriques, par exemple d'une taille de 1 à 10 mm, de préférence de 2 à 5 mm aspirables.

La quantité de gel déposé et donc l'épaisseur de gel déposé, de préférence supérieure à 500 g/m² soit 500 µm, est le paramètre fondamental qui influence la taille des résidus secs formés après séchage du gel et qui assure ainsi que des résidus secs de taille millimétrique et non des résidus pulvérulents soient formés, de tels résidus étant facilement éliminés par un procédé mécanique et de préférence par aspiration.

Cependant, il est également à noter que lorsque le gel contient un agent tensio-actif à faible concentration, le séchage du gel est amélioré et conduit à un phénomène de fracturation homogène avec une taille des résidus secs mono-dispersés et une aptitude accrue des résidus secs à se détacher du support.

Le gel est ensuite maintenu sur la surface à traiter pendant toute la durée nécessaire à son séchage. Au cours de cette étape de séchage dont on peut considérer qu'elle constitue la phase active du procédé selon l'invention, les solvants contenus dans le gel, s'évaporent jusqu'à l'obtention d'un résidu sec et solide.

La durée de séchage dépend de la composition du gel dans les gammes de concentration de ses constituants données plus haut, mais aussi, comme on l'a déjà précisé, de la quantité de gel déposé par unité de surface c'est-à-dire de l'épaisseur de gel déposé.

La durée de séchage dépend aussi des conditions climatiques à savoir de la température, de la ventilation et de l'humidité relative de l'atmosphère dans laquelle se trouve la surface solide.

Le procédé selon l'invention peut être mis en œuvre dans des conditions climatiques extrêmement larges, à savoir à une température T de 1°C à 50°C et à une humidité relative HR de 20% à 80%.

La durée de séchage du gel selon l'invention est donc généralement de 15 minutes à 24 heures, de préférence de 1 heure à 24 heures à une température T de 1°C à 50°C et à une humidité relative HR de 20% à 80%.

Il est à noter que la formulation du gel utilisé selon l'invention notamment lorsqu'elle contient des tensio-actifs tels que les « Pluronics® » assure généralement (c'est-à-dire notamment généralement dans des conditions climatiques raisonnables, comme on l'a indiqué plus haut) un temps de séchage qui est sensiblement équivalent au temps de contact entre le gel et le graffiti qui est nécessaire, requis pour détruire, éliminer le graffiti polluant le matériau.

En d'autres termes, la formulation du gel assure un temps de séchage qui n'est autre que le temps nécessaire pour éliminer, détruire le graffiti et qui est compatible avec la cinétique de destruction du graffiti et notamment avec la cinétique de destruction de la peinture, encre ou autre qui constitue le graffiti.

A l'issue du séchage du gel, le gel se fracture de manière homogène pour donner des résidus secs solides millimétriques, par exemple d'une taille de 1 à 10 mm, de préférence de 2 à 5 mm non pulvérulents, généralement sous la forme de paillettes solides. Les résidus secs et solides contiennent des composés résultant de la destruction du graffiti.

Les résidus secs, tels que des paillettes, obtenus à l'issue du séchage présentent une faible adhérence à la surface du matériau nettoyé. De ce fait, les résidus secs obtenus après séchage du gel peuvent être facilement récupérés par simple brossage et/ou aspiration. Toutefois, les résidus secs peuvent aussi être évacués par jet de gaz, par exemple par jet d'air comprimé.

Aucun rinçage n'est généralement nécessaire et le procédé selon l'invention ne génère aucun effluent secondaire.

Toutefois, un léger rinçage par exemple à l'eau, des surfaces traitées, sans action mécanique telle qu'un brossage peut exceptionnellement être nécessaire pour éliminer éventuellement des traces de peinture résiduelles et de faibles résidus de gel.

Selon l'invention, on réalise donc ainsi tout d'abord une importante économie de réactifs chimiques par rapport à un procédé de décontamination par lavage avec une solution. Ensuite du fait qu'un déchet sous la forme d'un résidu sec directement aspirable est obtenu, une opération de rinçage avec de l'eau ou avec un liquide est généralement évitée. Il en résulte bien évidemment une diminution de la quantité d'effluents produits mais aussi une simplification notable en termes de filière de traitement et d'exutoire. En particulier, selon l'invention les déchets obtenus à la fin du traitement ne sont pas entraînés dans les réseaux d'évacuation des eaux pluviales en violation des réglementations.

En raison de la composition du gel utilisé selon l'invention, les déchets produits, une fois secs, ne représentent qu'un faible volume et sont essentiellement minéraux. Ils peuvent donc être stockés ou dirigés vers une filière d'évacuation sans traitement préalable.

A titre d'exemple, dans le cas courant où l'on applique 1000 grammes de gel par m² de surface traitée, la masse de déchets secs produite est inférieure à 300 grammes par m².

L'invention va maintenant être décrite en référence aux exemples suivants, donnés à titre illustratif et non limitatif.

### Exemples.

Les gels utilisés dans les exemples qui suivent sont des gels composés d'alumine et d'un ou plusieurs solvants organiques.

Ce ou ces solvants organiques constituent l'agent actif de décapage de ces gels.

L'alumine est de l'alumine Aeroxide® Alu C commercialisée par EVONIK® INDUSTRIES d'une surface spécifique de 100 m²/g (BET).

Le ou les solvant(s) organiques sont choisi(s) dans la famille des cétones et la famille des esters et répondent à la formule (I) donnée plus haut.

Les solvants des formulations de gels des exemples qui suivent sont énumérés dans le Tableau I ci-dessous.

**Tableau I: Solvants utilisés dans les exemples.**

| Solvant | N° CAS | Formule Chimique |
|---|---|---|
| Acétate d'éthyle | 141-78-6 | 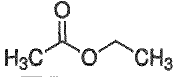 |
| Lévulinate d'éthyle | 539-88-8 | 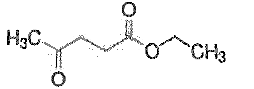 |
| Acétyl acétone | 123-54-6 | 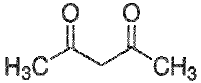 |
| Lévulinate de méthyle | 624-45-3 | 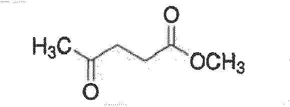 |
| Acétoacétate de méthyle | 105-45-3 | 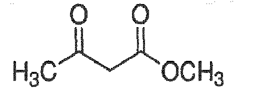 |
| Acétoacétate d'éthyle | 141-97-9 | 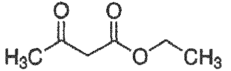 |
| Succinate de diméthyle | 106-65-0 | 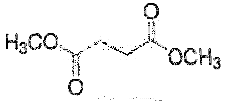 |
| Malonate de diéthyle | 105-53-3 | 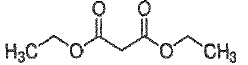 |

Les gels selon l'invention ou non conformes à l'invention, utilisés dans les exemples qui suivent sont préparés de la manière suivante : le ou les solvants, sont mélangés à l'aide d'un agitateur mécanique, muni d'un agitateur à trois pales, à une vitesse de 200 rotations/min, pendant 3 à 5 minutes. L'alumine, dans une proportion de 7% à 11% massique selon les gels, est ensuite ajoutée progressivement dans le mélange réactionnel, en augmentant graduellement la vitesse d'agitation au fur et à mesure que la viscosité croît, pour arriver à environ 400 à 600 tours/min sans qu'il n'y ait de projections. Le gel est ensuite maintenu sous agitation pendant 5 minutes.

Les gels ainsi préparés sont ensuite testés sur différents type de graffitis, « tags », se trouvant sur différents matériaux, en les appliquant à la spatule ou à l'aide d'un pulvérisateur

L'épaisseur de gel appliquée est de 0,5 à 2 mm suivant le moyen d'application utilisé.

Dans tous les cas, le gel testé sèche, se fracture en absorbant la peinture des graffitis, et forme ainsi des paillettes qui peuvent ensuite être brossées.

La durée de séchage des gels varie en fonction du solvant ou du mélange de solvants utilisé. Cette durée de séchage peut aller de 15 minutes pour l'acétate d'éthyle à 48 h pour le lévulinate d'éthyle.

Un léger brossage humide est nécessaire dans certains cas pour enlever les résidus de peinture des graffitis qui ne sont pas emprisonnés dans les paillettes de gel sec.

### Exemple 1 (conforme à l'invention) :

Dans cet exemple, on évalue l'efficacité d'un gel selon l'invention dont l'agent actif est un mélange d'acétate d'éthyle et de malonate de diéthyle pour éliminer un graffiti, « tag » déposé sur un support en un matériau simple, à savoir de l'acier peint laqué.

Le gel utilisé dans cet exemple est un mélange d'alumine (10% massique) et d'un agent actif qui est un mélange de solvants (80:20 massique acétate d'éthyle: malonate de diéthyle) (90% massique).

Ce gel est fabriqué selon le protocole décrit plus haut.

Ce gel constitue le gel de référence et sera utilisé dans ce qui suit dans de nombreux autres exemples.

L'efficacité du gel dans l'élimination des graffitis est montrée à l'aide de photographies mais également en établissant un profil du support à l'aide d'un profilomètre optique.

L'essai destiné à montrer l'efficacité du gel est réalisé suivant le protocole suivant :
Un coupon, plaque, d'acier peint laqué est recouvert -sur les deux tiers de sa surface, situés à droite- d'un graffiti, « tag » en une peinture noire issue d'une bombe de tag d'un grand fabriquant de peintures pour graffitis, à savoir la peinture MOLOTOW® ultra-couvrante noire CoversAll2™ Outline Black. Une fois bien recouverte de peinture, la plaque est laissée sous sorbonne pour séchage pendant 24h. Le gel est ensuite appliqué à la spatule sur le tiers de la surface de la plaque situé le plus à droite avec une épaisseur de 0,5-2 mm. Suite au séchage complet du gel, les paillettes de gel sec sont brossées et la plaque est sommairement rincée afin de pouvoir réaliser une analyse d'image (niveau de gris) à l'aide d'un logiciel (ImageJ), ainsi qu'une mesure au profilomètre. Il s'agit d'un profilomètre fabriqué par la société STIL (Sciences et Techniques Industrielles de la Lumière) qui est utilisé pour tracer des profils de rugosité et mesurer la rugosité moyenne sur les différentes pièces.

La surface de la plaque d'acier peint taguée est divisée en trois parties, à savoir de gauche à droite :
- une première partie vierge où ni tag ni gel n'a été déposé,
- une deuxième partie où le « tag » a été appliqué, mais n'a pas été traité par le gel,
- une troisième partie où le gel a été appliqué sur le tag puis les paillettes de gel sec brossées.

Les résultats sont présentés sur les Figures 1, 2, et 3.

Il apparaît sur la photographie finale (Figure 1) ainsi que sur le profil en niveau de gris obtenu à partir de cette photographie selon la ligne claire A portée sur la Figure 1, que la peinture noire du tag a été éliminée avec succès sur la partie de droite de la plaque traitée par le gel.

On peut ainsi retrouver le même niveau de gris sur la partie « détaguée » par le gel à droite, que sur la partie restée vierge à gauche (Figure 2).

Pour confirmer ce résultat, un profil de rugosité tracé de gauche à droite de la plaque (Figure 3) montre bien une augmentation de l'épaisseur et une augmentation de rugosité du passage de la zone vierge à la zone peinte, puis une perte d'épaisseur et de rugosité au passage sur la zone « détaguée », prouvant l'élimination de l'épaisseur de la peinture du tag.

### Exemple 2 (conforme à l'invention).

Dans cet exemple, on évalue l'efficacité du gel de référence de l'exemple 1 selon l'invention pour éliminer des graffitis sur différents type de matériaux, à savoir l'acier inoxydable, l'acier peint (voir exemple 1, Figures 1 à 3), le verre, la céramique, le béton, et une matière plastique : le PVC.

Comme dans l'exemple 1, des plaques en chacun de ces matériaux sont pourvues d'un graffiti, « tag » en une peinture noire issue d'une bombe de tag d'un grand fabriquant de peintures pour graffitis, à savoir la peinture MOLOTOW® ultra-couvrante noire CoversAll2™ Outline Black.

Les essais sont réalisés selon le même protocole d'essai que celui utilisé dans l'exemple 1.

Les résultats pour les plaques en acier inoxydable, le verre, la céramique, le béton, et une matière plastique : le PVC sont présentés respectivement sur les Figures 4 à 8.

Les résultats pour la plaque en acier peint sont présentés dans l'exemple 1, et les Figures 1 à 3.

Il apparaît que sur l'ensemble des matériaux simples, non poreux, le gel élimine efficacement le tag là où il est appliqué, c'est-à-dire sur la moitié droite du support.

Concernant des surfaces poreuses telles le béton, l'élimination est légèrement moins nette mais peut être améliorée par l'application d'une seconde couche de gel ou par une épaisseur plus importante.

C'est-à-dire que, après élimination des paillettes de la première couche de gel, une seconde couche de gel est appliquée. En d'autres termes, on effectue un second passage.

### Exemple 3 (conforme à l'invention).

Dans cet exemple, on montre l'efficacité du gel de référence de l'exemple 1 selon l'invention pour éliminer des graffitis en trois peintures différentes disponibles dans le commerce, réalisés sur des coupons en acier peint laqués.

Ces trois peintures sont :
- la peinture ultra-couvrante noire Molotow® décrite dans l'exemple 1 ;
- une peinture issue d'une bombe de peinture rose Molotow® Premium Mad C psycho pink,
- une peinture issue d'une bombe de peinture Luxens® rouge fluo.

Les essais sont réalisés selon le même protocole d'essai que celui utilisé dans l'exemple 1.

Des photographies sont prises lors des différentes étapes du procédé et montrent le support tagué, l'application du gel, le gel totalement sec, l'élimination des paillettes par brossage, et enfin l'état du support après un rinçage léger de tout le support.

Il apparaît que quelle que soit la peinture utilisée pour le « tag », la partie traitée par le gel est rendue à son aspect d'origine suite au léger rinçage.

Il est à noter que le rinçage n'a aucune action sur la peinture non traitée par le gel et n'est finalement nécessaire que pour éliminer la peinture du tag noir qui est plus persistante que les deux autres peintures rose et rouge fluo.

### Exemple 4 (non conforme à l'invention, donné à titre d'information) :

Dans cet exemple, on évalue l'efficacité de huit gels non conformes à l'invention, qui contiennent chacun un solvant, agent actif différent, pour éliminer un graffiti, « tag » déposé sur des coupons en acier peint laqués. Le graffiti, « tag » est une peinture noire issue d'une bombe de tag, à savoir la peinture MOLOTOW® ultra-couvrante noire CoversAll2™ Outline Black (voir exemple 1).

Les gels utilisés dans cet exemple sont des mélanges d'alumine (10% massique) et de l'un des solvants, agents actifs figurant dans le Tableau I ci-dessus (90% massique).

Ces gels sont fabriqués selon le protocole décrit plus haut.

Les essais sont réalisés selon le même protocole d'essai que celui utilisé dans l'exemple 1.

Les résultats sont exposés sur les Figures 9 à 16.

Il est à noter que les temps de séchage observés peuvent fortement varier en fonction des conditions d'utilisation du gel (température, épaisseur du gel, ventilation...).

Les temps de séchage indiqués ici ont tous été observés dans les mêmes conditions et permettent ainsi de comparer les gels entre eux.

Des photographies ont été prises qui montrent l'état du coupon dont la partie droite a été traitée par le gel en question après l'élimination des paillettes de gel sans rinçage.

A partir de ces photographies ont été établis les profils en niveau de gris correspondants (Figures 9 à 16).

Il apparaît que ces solvants sont relativement efficaces sur ce type de peinture, certains séchant plus ou moins rapidement et les gels étant donc plus ou moins efficaces.

Plus précisément :
- le gel contenant de l'acétate d'éthyle sèche très rapidement (15-20 min) mais conserve malgré tout une excellente efficacité décapante (très peu de résidus de peinture qui de plus s'éliminent par simple rinçage).
- le gel contenant du lévulinate d'éthyle sèche très lentement (2 à 3 jours), mais cette durée de contact prolongée ne confère pas une efficacité décapante plus importante à ce gel.
- le gel contenant de l'acétyl acétone sèche sur une durée classiquement optimale pour les gesl aspirables, soit 2 à 3 heures, et posséde un pouvoir décapant relativement bon.
- le gel contenant du lévulinate de méthyle posséde une durée de séchage classique (2-3h) et son pouvoir décapant est particulièrement bon, ce gel laisse peu de résidus de peinture qui s'éliminent par un rincage à l'eau. De plus, ce solvant ne dégage pas d'odeur trop forte et ne présente pas de risques sanitaires puisqu'il est utilisé dans l'industrie agroalimentaire. En revanche, son prix au litre reste peu attractif.
- le gel contenant de l'acétoacétate de méthyle est très peu efficace car son pouvoir décapant est très faible malgré une durée de contact (séchage) prolongée de 2 à 3 jours.
- le gel contenant de l'acétoacétate d'éthyle possède un temps de séchage de 2-3 jours et est relativement efficace dans les conditions expérimentales utilisées pour ces essais.
- le gel contenant du succinate de diméthyle a une durée de séchage classique, soit 2 à 3h, et son pouvoir décapant est relativement bon, malgré les résidus de peinture apparaissant entre les paillettes de gel sec.
- le gel contenant du malonate de diéthyle a une durée de séchage d'environ 24h et son pouvoir décapant est relativement bon, malgré les résidus de peinture apparaissant entre les paillettes de gel sec.

### Exemple 5 (conforme à l'invention).

Dans cet exemple, on évalue l'efficacité d'un gel selon l'invention, contenant en tant qu'agent actif un autre mélange de solvants que celui du gel de l'exemple 1, pour éliminer des graffitis.

En effet, il est judicieux d'utiliser, dans les gels selon l'invention, des mélanges de solvants en tant qu'agent actif de décapage pour allonger le temps de séchage du gel et donc augmenter son efficacité décapante, pour limiter l'attaque du solvant sur les plastiques ou encore pour réduire la toxicité globale du gel.

Ainsi, le gel de référence de l'exemple 1 a été formulé avec un mélange d'acétate d'éthyle et de malonate de diéthyle, en effet :
- un gel à l'acétate d'éthyle seul est très efficace pour éliminer la peinture mais il sèche beaucoup trop vite (durée de séchage environ 15 à 30 minutes, cf. Exemple 4), sans autre solvant, notamment sur les matériaux poreux, et il est donc finalement moins efficace,
- un gel au malonate de diéthyle seul sèche très lentement (en environ 24h, cf. Exemple 4) mais il est moins efficace que l'acétate d'éthyle gélifié.

Le mélange de ces deux solvants permet ainsi d'obtenir un gel avec une durée de séchage raisonnable, à savoir de 1 à 4h, et efficace.

Un gel selon l'invention contenant un autre mélange de solvants a donc été préparé afin d'évaluer son efficacité pour éliminer des graffitis.

Ce gel est un mélange d'alumine (10% massique) et d'un agent actif qui est un mélange de solvants (80:20 massique acétate d'éthyle: acétoacétate de méthyle) (90% massique).

Ce gel a été fabriqué selon le protocole décrit plus haut.

Ce gel est utilisé pour éliminer un graffiti, « tag » déposé sur des coupons en acier peint laqués. Le graffiti, « tag » est une peinture noire issue d'une bombe de tag, à savoir la peinture MOLOTOW® ultra-couvrante noire CoversAll2" Outline Black (voir exemple 1).

Les essais sont réalisés selon le même protocole d'essai que celui utilisé dans l'exemple 1.

Les résultats concernant le gel qui est un mélange d'alumine (10% massique) et d'un agent actif qui est un mélange de solvants (80:20 massique acétate d'éthyle: acétoacétate de méthyle) (90% massique) sont présentés sur la Figure 17.

Les résultats concernant le gel de référence de l'exemple 1 sont présentés sur les Figures 1 à 3.

Il apparaît clairement que le mélange d'actif testé dans l'exemple 1 (Figures 1 à 3) est meilleur que celui testé dans cet exemple 5 puisque le tag est éliminé plus efficacement avec la combinaison de solvant du gel de l'exemple 1, qu'avec celle de cet exemple 5.

### Exemple 6.

Dans cet exemple, on met en œuvre des gels anti-graffiti selon l'invention et des gels anti-graffiti non conformes à l'invention, dans des conditions réelles, c'est-à-dire que l'on évalue l'efficacité de gels pour éliminer des graffitis réels, non simulés, effectivement présents sur des bâtiments, installations ou ouvrages d'art.

Deux essais dans des conditions réelles ont été ainsi réalisés.

Le premier essai a été réalisé sur des graffitis, « tags », présents sur un transformateur électrique en acier laqué et sur une pile de pont en béton.

Le gel testé pour l'élimination de ces graffitis est un gel non conforme à l'invention, dont le solvant, agent actif est de l'acetylacetone (89% massique) dans lequel a été incorporée l'alumine (11% massique).

Ce gel a été fabriqué selon le protocole décrit plus haut.

Le gel a été appliqué à la spatule sur différents tags de différentes couleurs et de différentes textures de peinture.

Les résultats de ce premier essai sur le terrain sont présentés sur les Figures 18A et 18B (transformateur) et sur les Figures 19A et 19B (pile de pont).

Il apparaît que le gel possède une action relativement efficace sur ces graffitis, « tags », que ce soit sur l'acier laqué du transformateur (Figures 18A et 18B) ou sur le béton de la pile de pont. Cependant, le gel ayant été testé sur de très petites surfaces avec beaucoup de vent (90km/h), et le solvant étant de plus très volatil, la durée d'action du gel a été relativement réduite (15 à 30 minutes au maximum) et son efficacité moins flagrante que dans le second essai réalisé.

Le second essai a été réalisé avec le gel de référence selon l'invention décrit dans l'exemple 1 qui possède une durée de séchage plus longue et donc plus adapté à des essais réels en extérieur. Le gel a été pulvérisé sur des bâtiments tagués à l'aide d'un pulvérisateur à peinture Wagner® (pistolet électrique W670). Les cibles étaient des graffitis sur une porte en acier peint (non émaillé). Après élimination des paillettes de gel sec à l'aide d'un aspirateur industriel, un léger rinçage des surfaces traitées, sans brossage a été effectué pour éliminer les traces de peinture résiduelles.

Les résultats de ce second essai sont présentés sur les Figures 20A et 20B.

## Revendications

1. Gel pour éliminer un graffiti sur une surface d'un substrat solide, constitué par une solution colloïdale comprenant, de préférence constituée par :
- 0,1% à 30% en masse, de préférence 0,1% à 25% en masse, de préférence encore 5% à 25% en masse, mieux 8% à 20% en masse, par exemple 10% en masse par rapport à la masse totale du gel, d'au moins un agent viscosant inorganique ;
- 70% à 99,9% en masse, de préférence 75% à 99,9% en masse, de préférence encore 75% à 95% en masse, par exemple 90% en masse, d'un mélange d'acétate d'éthyle et de malonate de diéthyle ou d'un mélange d'acétate d'éthyle et d'acétoacétate de méthyle ;
- éventuellement, 0,1% à 2% en masse par rapport à la masse totale du gel, d'au moins un agent tensio-actif;
- et éventuellement, de 0,01% à 10% en masse par rapport à la masse du gel, d'au moins un colorant et/ou pigment.

2. Gel selon la revendication 1, dans lequel le gel comprend un mélange d'acétate d'éthyle et de malonate de diéthyle ou un mélange d'acétate d'éthyle et d'acétoacétate de méthyle, dans des proportions en masse de 20% à 99%, de préférence de 50% à 99%, par exemple 80% d'acétate d'éthyle, et de 1% à 80%, de préférence de 1% à 50%, par exemple 20% de malonate de diéthyle ou d'acétoacétate de méthyle.

3. Gel selon l'une quelconque des revendications précédentes, dans lequel l'agent viscosant inorganique est choisi parmi les oxydes de métaux tels que les alumines, les oxydes de metalloïdes tels que les silices, les hydroxydes de métaux, les hydroxydes de metalloïdes, les oxyhydroxydes de métaux, les oxyhydroxydes de métalloïdes, les aluminosilicates, les argiles telles que la smectite, et leurs mélanges ; de préférence, l'agent viscosant inorganique est choisi parmi les silices pyrogénées, les silices précipitées, les silices hydrophiles, les silices hydrophobes, les silices acides, les silices basiques, et leurs mélanges.

4. Gel selon la revendication 3, dans lequel l'agent viscosant inorganique est constitué par une ou plusieurs alumine(s) ; de préférence, la ou les alumine(s) représentent de 5% à 30% en masse, de préférence de 7% à 15% en masse par rapport à la masse totale du gel.

5. Gel selon l'une quelconque des revendications précédentes, dans lequel l'agent tensio-actif est choisi parmi les agents tensio-actifs non ioniques tels que les copolymères blocs, séquencés comme les copolymères séquencés d'oxyde d'éthylène et d'oxyde de propylène, et les acides gras éthoxylés ; et leurs mélanges.

6. Gel selon l'une quelconque des revendications précédentes, qui comprend au moins un pigment minéral, de préférence ledit pigment minéral est présent à raison de 0,01% en masse à 10%, de préférence de 0,1% en masse à 5% en masse de la masse totale du gel.

7. Procédé pour éliminer un graffiti sur une surface d'un substrat solide, dans lequel on réalise au moins un cycle comprenant les étapes successives suivantes :
a) on applique le gel selon l'une quelconque des revendications 1 à 6, sur ladite surface ;
b) on maintient le gel sur la surface au moins pendant une durée suffisante pour que le gel élimine le graffiti, et pour que le gel sèche et forme un résidu sec et solide non pulvérulent contenant des composés résultant de l'élimination du graffiti;
c) on élimine le résidu sec et solide contenant les composés résultant de l'élimination du graffiti ;
de préférence, le substrat est un substrat poreux, de préférence encore, un substrat minéral poreux.

8. Procédé selon la revendication 7, dans lequel le substrat est au moins un matériau choisi parmi les métaux et alliages comme l'acier inoxydable, l'acier galvanisé, ou le zinc ; les aciers peints ; les polymères organiques tels que les matières plastiques ou caoutchoucs comme les poly(chlorure de vinyle)s ou PVC, les polypropylènes ou PP, les polyéthylènes ou PE notamment les polyéthylènes haute densité ou HDPE, les poly(méthacrylate de méthyle)s ou PMMA, les poly(fluorure de vinylidène)s ou PVDF, les polycarbonates ou PC ; les verres ; les matériaux cimentaires comme les pâtes, les ciments, les mortiers et les bétons ; les plâtres ; les briques ; les tuiles ; la terre crue ou cuite ; les pierres naturelles ou artificielles ; les enduits ; la fibre de verre, les fibrociments ; l'asphalte ; le goudron ; l'ardoise ; les matériaux à base de cellulose comme le bois ; et les céramiques.

9. Procédé selon l'une quelconque des revendications 7 à 8, dans lequel le graffiti comprend une peinture notamment une peinture de bombe aérosol, une encre, ou un mélange de celles-ci.

10. Procédé selon l'une quelconque des revendications 7 à 9, dans lequel le gel est appliqué sur la surface à raison de 100 g à 2000 g de gel par m² de surface, de préférence de 500 g à 1500 g de gel par m² de surface, de préférence encore de 600 g à 1000 g de gel par m² de surface.

11. Procédé selon l'une quelconque des revendications 7 à 10, dans lequel le gel est appliqué sur la surface du substrat solide par pulvérisation, au pinceau, ou avec une taloche.

12. Procédé selon l'une quelconque des revendications 7 à 11, dans lequel lors de l'étape b), le séchage est réalisé à une température de 1°C à 50°C, de préférence de 15°C à 25°C, et sous une humidité relative de 20% à 80%, de préférence de 20% à 70%.

13. Procédé selon l'une quelconque des revendications 7 à 12, dans lequel le gel est maintenu sur la surface pendant une durée de 30 minutes à 72 heures, de préférence de 1 à 48 heures, de préférence encore de 1 à 24 heures, mieux de 1 à 5 heures, par exemple de 1 à 4 heures.

14. Procédé selon l'une quelconque des revendications 7 à 13, dans lequel le résidu sec et solide se présente sous la forme de particules, par exemple de paillettes, d'une taille de 1 à 10 mm, de préférence de 2 à 5 mm.

15. Procédé selon l'une quelconque des revendications 7 à 14, dans lequel le résidu sec et solide est éliminé de la surface solide par brossage et/ou aspiration.

16. Procédé selon l'une quelconque des revendications 7 à 15, dans lequel le cycle est répété de 1 à 10 fois en utilisant le même gel lors de tous les cycles ou en utilisant des gels différents lors d'un ou de plusieurs cycle(s).

17. Procédé selon l'une quelconque des revendications 7 à 16, dans lequel lors de l'étape b), le gel, avant séchage total, est remouillé avec un solvant, de préférence avec le solvant du gel appliqué lors de l'étape a).

## Patentansprüche

1. Gel zum Entfernen von Graffiti auf einer Oberfläche eines festen Substrats, bestehend aus einer kolloidalen Lösung, umfassend, vorzugsweise bestehend aus:
- 0,1 bis 30 Masse-%, vorzugsweise 0,1 bis 25 Masse-%, weiter bevorzugt 5 bis 25 Masse-%, besser 8 bis 20 Masse-%, beispielsweise 10 Masse-%, bezogen auf die Gesamtmasse des Gels, zumindest eines anorganischen Viskositätsmittels;
- 70 bis 99,9 Masse-%, vorzugsweise 75 bis 99,9 Masse-%, weiter bevorzugt 75 bis 95 Masse-%, beispielsweise 90 Masse-%, eines Gemischs aus Ethylacetat und Diethylmalonat oder eines Gemisch aus Ethylacetat und Methylacetoacetat;
- gegebenenfalls 0,1 bis 2 Masse-%, bezogen auf die Gesamtmasse des Gels, zumindest eines Tensids;
- und gegebenenfalls 0,01 bis 10 Masse-%, bezogen auf die Masse des Gels, zumindest eines Farbstoffs und/oder Pigments.

2. Gel nach Anspruch 1,
wobei das Gel ein Gemisch aus Ethylacetat und Diethylmalonat oder ein Gemisch aus Ethylacetat und Methylacetoacetat in Masseanteilen von 20 % bis 99 %, vorzugsweise von 50 % bis 99 %, beispielsweise von 80 %, Ethylacetat und von 1 % bis 80 %, vorzugsweise von 1 % bis 50 %, beispielsweise von 20 %, Diethylmalonat oder Methylacetoacetat enthält.

3. Gel nach einem der vorangehenden Ansprüche,
wobei das anorganische Viskositätsmittel ausgewählt ist aus Oxiden von Metallen, wie Aluminiumoxiden, Oxiden von Metalloiden, wie Kieselerden, Hydroxiden von Metallen, Hydroxiden von Metalloiden, Oxyhydroxiden von Metallen, Oxyhydroxiden von Metalloiden, Aluminosilikaten, Tonen, wie Smektit, und deren Gemischen; wobei das anorganische Viskositätsmittel vorzugsweise ausgewählt ist aus pyrogenen Kieselsäuren, gefällten Kieselsäuren, hydrophilen Kieselsäuren, hydrophoben Kieselsäuren, sauren Kieselsäuren, basischen Kieselsäuren und deren Gemischen.

4. Gel nach Anspruch 3,
wobei das anorganische Viskositätsmittel aus einem oder mehreren Aluminiumoxiden besteht; wobei das Aluminiumoxid bzw. die Aluminiumoxiden vorzugsweise 5 bis 30 Masse-%, vorzugsweise 7 bis 15 Masse-%, bezogen auf die Gesamtmasse des Gels, ausmachen.

5. Gel nach einem der vorangehenden Ansprüche,
wobei das Tensid ausgewählt ist aus nichtionischen Tensiden, wie Blockcopolymeren, wie beispielsweise Blockcopolymeren aus Ethylenoxid und Propylenoxid, und ethoxylierten Fettsäuren; und deren Gemischen.

6. Gel nach einem der vorangehenden Ansprüche,
wobei das Gel zumindest ein anorganisches Pigment enthält, wobei das anorganische Pigment vorzugsweise in einer Menge von 0,01 bis 10 Masse-%, vorzugsweise 0,1 bis 5 Masse-%, der Gesamtmasse des Gels vorhanden ist.

7. Verfahren zum Entfernen von Graffiti auf einer Oberfläche eines festen Substrats, bei dem zumindest ein Zyklus mit den nachstehenden aufeinanderfolgenden Schritten durchgeführt wird, wonach:
a) das Gel nach einem der Ansprüche 1 bis 6 auf diese Oberfläche aufgetragen wird;
b) das Gel mindestens für eine Zeitspanne auf der Oberfläche gehalten wird, die ausreicht, damit mit dem Gel Graffiti entfernt wird und das Gel trocknet und einen trockenen, festen, nicht pulverförmigen Rückstand bildet, der Verbindungen enthält, die aus der Entfernung von Graffiti resultieren;
c) der trockene, feste Rückstand, der die bei der Graffitientfernung entstandenen Verbindungen enthält, entfernt wird;
wobei vorzugsweise das Substrat ein poröses Substrat, weiter bevorzugt ein poröses mineralisches Substrat, ist.

8. Verfahren nach Anspruch 7,
wobei das Substrat zumindest ein Material ist, das ausgewählt ist aus Metallen und Legierungen, wie Edelstahl, verzinktem Stahl oder Zink; lackierten Stählen; organischen Polymeren, wie Kunststoffe oder Kautschuke, wie Polyvinylchloride bzw. PVC, Polypropylene bzw. PP, Polyethylene bzw. PE, insbesondere Polyethylene mit hoher Dichte bzw. HDPE, Polymethylmethacrylate bzw. PMMA, Polyvinylidenfluoride bzw. PVDF, Polycarbonate bzw. PC; Glas; zementähnlichen Materialien, wie Pasten, Zemente, Mörtel und Betone; Gipsen, Ziegeln; Fliesen; Lehm oder Terracotta ; Natur- oder Kunststein, Putzen; Glasfaser, Faserzement; Asphalt; Teer; Schiefer; Materialien auf Zellulosebasis, wie Holz; und Keramik.

9. Verfahren nach einem der Ansprüche 7 bis 8,
wobei das Graffiti eine Farbe, insbesondere eine Sprühdosenfarbe, eine Tinte oder ein Gemisch aus diesen enthält.

10. Verfahren nach einem der Ansprüche 7 bis 9,
wobei das Gel in einer Menge von 100 g bis 2000 g Gel pro m² Fläche, vorzugsweise 500 g bis 1500 g Gel pro m² Fläche, weiter bevorzugt 600 g bis 1000 g Gel pro m² Fläche, auf die Oberfläche aufgetragen wird.

11. Verfahren nach einem der Ansprüche 7 bis 10,
wobei das Gel durch Sprühen, Aufpinseln oder Aufspachteln auf die Oberfläche des festen Substrats aufgetragen wird.

12. Verfahren nach einem der Ansprüche 7 bis 11,
wobei in Schritt b) die Trocknung bei einer Temperatur von 1 °C bis 50 °C, vorzugsweise von 15 °C bis 25 °C, und mit einer relativen Luftfeuchtigkeit von 20 % bis 80 %, vorzugsweise von 20 % bis 70 %, durchgeführt wird.

13. Verfahren nach einem der Ansprüche 7 bis 12,
wobei das Gel für eine Zeitspanne von 30 Minuten bis 72 Stunden, vorzugsweise 1 bis 48 Stunden, weiter bevorzugt von 1 bis 24 Stunden, besser 1 bis 5 Stunden, beispielsweise 1 bis 4 Stunden, auf der Oberfläche gehalten wird.

14. Verfahren nach einem der Ansprüche 7 bis 13,
wobei der trockene, feste Rückstand in Form von Partikeln, beispielsweise von Flocken, mit einer Größe von 1 bis 10 mm, vorzugsweise 2 bis 5 mm, vorliegt.

15. Verfahren nach einem der Ansprüche 7 bis 14,
wobei der trockene, feste Rückstand durch Abbürsten und/oder Absaugen von der festen Oberfläche entfernt wird.

16. Verfahren nach einem der Ansprüche 7 bis 15,
wobei der Zyklus 1 bis 10 Mal wiederholt wird, indem bei allen Zyklen dasselbe Gel verwendet wird oder bei einem oder mehreren Zyklen verschiedene Gele verwendet werden.

17. Verfahren nach einem der Ansprüche 7 bis 16,
wobei in Schritt b) das Gel vor der vollständigen Durchtrocknung mit einem Lösungsmittel, vorzugsweise mit dem Lösungsmittel des in Schritt a) aufgetragenen Gels, erneut befeuchtet wird.

## Claims

1. A gel to remove a graffiti on a surface of a solid substrate, consisting of a colloidal solution comprising, preferably consisting of:
- 0.1 to 30 mass %, preferably 0.1 to 25 mass %, more preferably 5 to 25 mass %, further preferably 8 to 20 mass %, for exemple 10 mass % relative to the total mass of the gel of at least one inorganic viscosifying agent;
- 70 to 99.9 mass %, preferably 75 to 99.9 mass %, more preferably 75 to 95 mass %, for example 90 mass %, of a mixture of ethyl acetate and diethyl malonate or of a mixture of ethyl acetate and methyl acetoacetate;
- optionally, 0.1 to 2 mass % relative to the total mass of the gel of at least one surfactant;
- and optionally, 0.01 to 10 mass % relative to the mass of the gel of at least one dye and/or pigment.

2. The gel according to claim 1, wherein the gel comprises a mixture of ethyl acetate and diethyl malonate or a mixture of ethyl acetate and methyl acetoacetate, preferably in mass proportions of 20 % to 99 %, more preferably 50 % to 99 %, for exemple 80 % of ethyl acetate and 1 % to 80 %, preferably 1 % to 50 %, for exemple 20 % of diethyl malonate or methyl acetoacetate.

3. The gel according to any one of the preceding claims, wherein the inorganic viscosifying agent is selected from among metal oxides such as aluminas, metalloid oxides such as silicas, metal hydroxides, metalloid hydroxides, metal oxyhydroxides, metalloid oxyhydroxides, aluminosilicates, clays such as smectite, and the mixtures thereof; preferably, the inorganic viscosifying agent is selected from among pyrogenated silicas, precipitated silicas, hydrophilic silicas, hydrophobic silicas, acid silicas, basic silicas, and the mixtures thereof.

4. The gel according to claim 3, wherein the inorganic viscosifying agent consists of one or more alumina(s); preferably, the alumina(s) represent 5 to 30 mass %, preferably 7 to 15 mass % relative to the total weight of the gel.

5. The gel according to any one of the preceding claims, wherein the surfactant is selected from among non-ionic surfactants such as block copolymers e.g. block copolymers of ethylene oxide and propylene oxide, and ethoxylated fatty acids; and the mixtures thereof.

6. The gel according to any one of the preceding claims, further comprising at least one mineral pigment, preferably said mineral pigment is contained in a proportion of 0.01 to 10 mass %, preferably 0.1 to 5 mass % relative to the total mass of the gel.

7. A method to remove a graffiti on a surface of a solid substrate, wherein at least one cycle is performed comprising the following successive steps:
a) the gel according to any one of claims 1 to 6 is applied on said surface;
b) the gel is maintained on the surface at least for a sufficient time so that the gel removes the graffiti, and so that the gel dries and forms a non-powdery, dry and solid residue containing compounds resulting from the removal of the graffiti;
c) the dry and solid residue containing the compounds resulting from the removal of the graffiti is removed; preferably, the substrate is a porous substrate, still preferably, a mineral porous substrate.

8. The method according to claim 7, wherein the substrate is at least a material selected from among metals and alloys such as stainless steel, galvanised steel or zinc; painted steels; organic polymers such as plastic materials or rubbers, such as polyvinyl chlorides or PVC, polypropylenes or PP, polyethylenes or PE in particular high density polyethylenes or HDPE, poly(methyl methacrylate)s or PMMA, poly(vinylidene fluoride)s or PVDF, polycarbonates or PC; glasses; cementitious materials such as pastes, cements, mortars and concretes; plasters; bricks; tiles; raw earth or terracotta; natural or artificial stones; coatings; glass fibre; fibrocements; asphalt; tar; slate; cellulose-based materials such as wood; and ceramics.

9. The method according to any one of claims 7 to 8, wherein the graffiti comprises a paint, in particular a spray can paint, an ink or a mixture thereof.

10. The method according to any one of claims 7 to 9, wherein the gel is applied to the surface in a proportion of 100 g to 2000 g of gel per m² of surface, preferably 500 g to 1500 g of gel per m² of surface, more preferably 600 g to 1000 g of gel per m² of surface.

11. The method according to any one of claims 7 to 10, wherein the gel is applied to the surface of the solid substrate by spraying, with a brush or with a trowel.

12. The method according to any one of claims 7 to 11, wherein during step b), drying takes place at a temperature of 1 °C to 50 °C, preferably 15 °C to 25 °C, and under a relative humidity of 20 % to 80 %, preferably 20 % to 70 %.

13. The method according to any one of claims 7 to 12, wherein the gel is maintained on the surface for a time of 30 minutes to 72 hours, preferably 1 to 48 hours, more preferably 1 to 24 hours, further preferably 1 to 5 hours e.g. 1 to 4 hours.

14. The method according to any one of claims 7 to 13, wherein the dry and solid residue is in the form of particles e.g. of flakes, of a size from 1 to 10 mm, preferably from 2 to 5 mm.

15. The method according to any one of claims 7 to 14, wherein the dry and solid residue is removed from the solid surface by brushing and/or suction.

16. The method according to any of claims 7 to 15, wherein the cycle is repeated 1 to 10 times using the same gel during all the cycles or using different gels during one or more cycle(s).

17. The method according to any one of claims 7 to 16, wherein during step b), the gel before complete drying is rewetted with a solvent, preferably with the solvent of the gel applied during step a).
